# EUROPEAN PATENT SPECIFICATION

(11) **EP 1 175 466 B1**
(45) Date of publication and mention of the grant of the patent: **01.08.2007**
(21) Application number: 00926237.9
(22) Date of filing: 21.04.2000
(51) Int. Cl.: C09D 183/06, C09D 183/14, C08J 7/04, G02B 1/10

(54) **COMPOSITION FOR PROVIDING AN ABRASION-RESISTANT COATING**
ZUSAMMENSETZUNG FÜR ABRIEBFESTE BESCHICHTUNG
COMPOSITION PRODUISANT UN REVETEMENT RESISTANT A L'ABRASION

(30) Priority: 23.04.1999 US 130996 P; 23.04.1999 US 130768 P; 23.04.1999 US 130767 P
(43) Date of publication of application: 30.01.2002
(73) Proprietor: SDC COATINGS, INC., Anaheim, CA 92806 (US)
(72) Inventor: TERRY, Karl, W., Huntington Beach, CA 92646 (US); LEMBO, Bryan, S., Newport Beach, CA 92663 (US)
(74) Representative: Ebner von Eschenbach, Jennifer
(86) International application number: PCT/US2000/010780
(87) International publication number: WO 2000/064992

(56) References cited:
- EP-A- 0 407 174
- EP-A- 0 526 975
- WO-A-98/46692
- US-A- 4 405 679
- US-A- 5 013 608
- US-A- 5 013 788
- US-A- 5 102 695
- US-A- 5 367 019
- US-A- 5 789 082
- US-A- 5 789 476

## Description

### BACKGROUND OF THE INVENTION

### 1. Field of the Invention

The present invention relates to coating compositions, as well as to coating compositions and methods of making and using such coating compositions which, when cured, provide substantially transparent coatings having abrasion resistance and a matched refractive index to that of the substrate, and which can also be tailored to control the extent of tint absorption.

The present invention also relates to liquid coating compositions having improved stability and improved abrasion resistance as well as methods of making and using such coating compositions wherein the liquid coating compositions are derived from aqueous-organic solvent mixtures

WIPO International Publication No. WO 98/46692 discloses a composition for providing an abrasion-resistant coating on a substrate. European Patent Publication No. 0407174 discloses highly tintable abrasion-resistant coatings. U.S. Patent No. 5,102,695 discloses clear, abrasion-resistant, tintable coating compositions that are based on siloxane/silica hybrid coating resins; and U.S. Patent No. 5,789,082 discloses a thermosetting coating composition. containing effective amounts of an epoxy-functional silane, colloidal metal oxide composite, and colloidal silica.

The present invention also relates to liquid coating compositions having improved abrasion resistance and improved stability wherein the liquid coating compositions are derived from aqueous- organic solvent mixtures containing effective amounts of an epoxy-functional silane, a carboxylic acid component, a colloidal metal oxide component, and a disilane.

An embodiment that is not part of the claimed invention relates to liquid coating compositions having improved abrasion resistance and improved stability wherein the liquid coating compositions are derived from aqueous-organic solvent mixtures containing effective amounts of an epoxy-functional silane, collodial metal oxide composite, a tetrafunctional silane, and collodial silica.

### 2. Description of Background Surrounding the Invention

Silica based coatings deposited on plastic materials are useful for their abrasion resistance and weatherability and thus extend the useable life of the plastic material. These coatings, in most cases, do not match the refractive index of the plastic material and allow for interference patterns to arise due to the refractive index mismatch between the cured coating film and the plastic substrate material. This mismatch leads to increased reflectivity of the coated plastic material and to exacerbation of material flaws due to the increased reflectivity.

The present invention solves these and other problems which have arisen in the art with respect to refractive index mismatches.

### BRIEF SUMMARY OF THE INVENTION

The invention is disclosed in Claims 1, 23, and 24 and in claims 2-22 depending on claim 1.

The present invention provides compositions having improved stability which, when applied to a variety of substrates and cured, form transparent coatings having abrasion resistant properties and a matched refractive index to that of the substrate, and which can be tailored to control the extent of tint absorption.

An embodiment that is not part of the claimed invention relates to an aqueous-organic solvent mixture containing from about 10 to about 90 weight percent, based on the total solids of the composition, of a mixture of hydrolysis products and partial condensates of an epoxy-functional silane, from about 1 to about 90 weight percent, based on the total weight of the composition, of a carboxylic acid functional compound selected from the group consisting of carboxylic acids, multifunctional carboxylic acids, anhydrides, and combinations thereof, from about 1 to 90 weight percent, based on the total solids of the composition, of a metal oxide composite colloid, and from about 1 to 75 weight percent, based on the total solids of the composition, of a colloidal silica material.

The coating composition of the present invention may comprise an aqueous-organic solvent mixture containing from about 10 to about 90 weight percent, based on the total solids of the composition, of a mixture of hydrolysis products and partial condensates of an epoxy- functional silane, from about 1 to about 90 weight percent, based on the total weight of the composition, of a carboxylic acid functional compound selected from the group consisting of carboxylic acids, multifunctional carboxylic acids, anhydrides, and combinations thereof, from about 1 to 90 weight percent, based on the total solids of the composition, of a metal oxide composite colloid, and from about 1 to 75 weight percent, based on the total solids of the composition, of a disilane. The coating compositions of the present invention may further include from about 0.1 to about 50 weight percent, based on the total solids of the composition of a mixture of hydrolysis products and partial condensates of one or more silane additives, from about 0.1 to 75 weight percent, based on the total solids of the composition, of a collodial silica material, from about 0.1 to 75 weight percent, based on the total solids of composition, of a tetrafunctional silane.

In one of the coating composition formulas, the coating composition may also contain from about 1 to 75 weight percent, based on the total solids of the composition of a tetrafunctional silane. The coating compositions of the present invention may further include from about 0.1 to about 50 weight percent of a mixture of hydrolysis products and partial condensates of one or more silane additives, based on the total solids of the composition.

It is an object of the present invention to provide coating compositions having improved stability, which form transparent coatings upon curing. It is a further object of the present invention to provide stable coating compositions, which form transparent coatings upon curing which have improved adhesion properties, improved resistance to crack formation, and a matched refractive index to that of the substrate.

Other objects, advantages and features of the present invention will become apparent upon reading the following detailed description in conjunction with the appended claims.

### DETAILED DESCRIPTION OF THE INVENTION

The invention is capable of other embodiments or of being practiced or carried out in various ways. Also, it is to be understood that the phraseology and terminology employed herein is for the purpose of description and should not be regarded as limiting.

The present invention relates to coating compositions having improved stability which, when applied to a variety of substrates and cured, form substantially transparent abrasion resistant coatings which possess improved adhesion, improved resistance to crack formation, and have a matched refractive index to that of the substrate.

For measuring the refractive indexes of the cured coating compositions, each composition was applied to a cleanly etched lead-silicate glass plaque by dip coating at 2 inches per minute and curing for a period of 1 hour at 120° C. The refractive indexes were measured using a Bausch and Lomb Abbe-3L refractometer. Either diiodomethane or 1-bromonaphthalene was used as the contact liquid. The standard procedures for measurement and instrument maintenance contained in the operator's manual for the Bausch and Lomb Abbe-3L refractometer were used for data gathering and processing.

For testing adhesion of the coated articles the procedures of ASTM D-3359, i.e. the tape test, were followed. For testing coated samples, coating compositions were applied to ADC lenses and cured at a temperature in the range from 95°C to 120° C for a period of 3 hours. Semi-quantitative assessments of the extent of cracking and adhesion were made using the following tests.

A typical test for cracking and adhesion consists of immersion of the coated article in boiling water or boiling tap water tint for a period of time, e. g. 30 to go minutes, followed by inspection for crack formation and testing for adhesion. Specifically, lenses were tested in BPI Black Tint (Brain Power, Inc.) under boiling conditions. In this test a bottle of BPI tint (approximately 100 grams) was diluted to about 900 grams with tap water and brought to a boil. The coated article was immersed in the boiling solution for a period of 30 minutes. The coated article was removed from the tint solution and inspected for cracking and tested for adhesion.

For measuring the control of tine absorption, a typical test consists of exposing the coated article to the tint mixture above which is in either deionized or tap water for a period of fifteen minutes at a temperature in the range between 90°C and 100°C. The light transmittance is measured, using a Gardner XL-835 Colormeter, in 15 minute intervals.

For testing abrasion resistance of coated substrates, any of a number of quantitative test methods may be employed, including the Taber Test (ASTM D-4060), the Tumble Test and Standard Method for the Modified Bayer Test, which is described in The AR Council of America Standard Testing Procedures section 5.2.5 and is a variation of the test method, ASTM F735-81. In addition, there are a number of qualitative test methods that may be used for measuring abrasion resistance, including the Steel Wool Test and the Eraser Test. In the Steel Wool Test and the Eraser Test, sample coated substrates are scratched under reproducible conditions (constant load, frequency, etc.). The scratched test samples are then compared and rated against standard samples. A semi-quantitative application of these test methods involves the use of an instrument, such as a Spectrophotometer or a Colorimeter, for measuring the scratches on the coated substrate as a haze gain.

The measured abrasion resistance of a cured coating on a substrate, whether measured by the Modified Bayer Test, Taber Test, Steel Wool Test, Eraser Test, Tumble Test, etc. is a function, in part, of the cure temperature and cure time. In general, higher temperatures and longer cure times result in higher measured abrasion resistance. Normally, the cure temperature and cure time are selected for compatibility with the substrate; although, sometimes less than optimum cure temperatures and cure times are used due to process and/or equipment limitations. It will be recognized by those skilled in the art that other variables, such as coating thickness and the nature of the substrate, will also have an effect on the measured abrasion resistance. In general, for each type of substrate and for each coating composition there will be an optimum coating thickness. The optimum cure temperature, cure time, coating thickness, and the like, can be readily determined empirically by those skilled in the art.

In the test method employed to determine the abrasion resistance of the coating compositions of the present invention, a commercially available alundum (grain code 1524,12 grit, alundum ZF) sold by Norton Advanced Ceramics of Canada Inc., 8001 Daly Street, Niagara Falls, Ontario, was used as the abrasive material. In this test, 540 grams alundum was loaded into a 9 5/16" x 6 3/4" cradle fitted with four lenses. Each set of four lenses, typically two poly(diethylene glycol-bis-allyl carbonate) lenses, herein referred to as ADC lenses, and two coated lenses, were subjected to a 4 inch stroke (the direction of the stroke coinciding with the 9 5/16" length of the cradle) at an oscillation frequency of 300 strokes per minute for a total of 4 minutes. The lens cradle was repositioned by turning 180 degrees after the initial 2 minutes of oscillations. Repositioning of the cradle was used to reduce the impact of any inconsistencies in the oscillating mechanism. The ADC reference lenses used were Silor 70 mm piano FSV lenses, purchased through Essilor of America, Inc. of St. Petersburg, Florida. The above described procedure is slightly modified from that which is described by the AR Council of America by increasing the weight of the alundum to accommodate the increased surface area of the larger cradle. The cradle described above holds 4 lenses.

The haze generated on the lenses was then measured on a Gardner XL-835 Colorimeter. The haze gain for each lens was determined as the difference between the initial haze on the lenses and the haze after testing. The ratio of the haze gain on the ADC reference lenses to the haze gain on the coated sample lenses was then reported as the resultant abrasion resistance of the coating material. A ratio of greater than 1 indicates a coating which provides greater abrasion resistance than the uncoated ADC reference lenses. This ratio is commonly referred to as the Bayer ratio, number or value. Coatings with high abrasion resistance possess larger Bayer numbers than coatings with lower abrasion resistance.

It should be understood that: (a) the descriptions herein of coating systems which contain epoxy-functional silanes, silane additives which do not contain an epoxy-functional group, and the carboxylic acid component, refer to the incipient silanes and carboxylic acid components from which the coating system is formed, (b) when the epoxy-functional silanes and silane additives which do not contain an epoxy-functional group, are combined with the aqueous-organic solvent mixture under the appropriate conditions, a hydrolysis reaction occurs resulting in partially or fully hydrolyzed species, (c) the resultant fully or partially hydrolyzed species can combine to form mixtures of multifunctional oligomeric siloxane species, (d) the oligomeric siloxane species may or may not contain pendant hydroxy and pendant alkoxy moieties and will be comprised of a silicon-oxygen matrix which contains both silicon-oxygen siloxane linkages and silicon-oxygen carboxylic acid component linkages, (e) the resultant mixtures are dynamic oligomeric suspensions that undergo structural changes which are dependent upon a multitude of factors including; temperature, pH, water content, catalyst concentration, and the like.

It should also be understood that: (a) the descriptions herein ofcoating systems which contain epoxy-functional silanes, tetrafunctional silanes, disilanes, silane additives which do not contain an epoxy-functional group, and the carboxylic acide component, refer to the incipipient silanes and carboxylic acid components from which the coating system is formed, (b) when the epoxy-functional silanes, tetrafunctional silanes, disilanes, and silane additives which do not contain an epoxy-functional group, are combined with the aqueous-organic solvent mixture under the appropriate conditions, a hydrolysis reaction occurs resulting in partially or fully hydrolyzed species, (c) the resultant fully or partially hydrolyzed species can combine to form mixtures of multifunctional oligomeric siloxane species, (d) the oligomeric siloxane species may or may not contain pendant hydroxy and pendant alkoxy moieties and will be comprised of a silicon-oxygen matrix which contains both silicon-oxygen siloxane linkages and silicon-oxygen carboxylic acid component linkages, (e) the resultant mixtures are dynamic oligomeric suspensions that undergo structural changes which are dependent upon a multitude of factors including; temperature, pH, water content, catalyst concentration, and the like.

It should be further understood that: (a) the descriptions herein of coating systems which contain epoxyfunctional silanes, tetrafunctional silanes, silane additives which do not contain an epoxyfunctional group, and the carboxylic acid component, refer to the incipient silanes and carboxylic acid components from which the coating system is formed, (b) when the epoxyfunctional silanes, tetrafunctional silanes, and silane additives which do not contain an epoxyfunctional group are combined with the aqueous-organic solvent mixture under the appropriate conditions, a hydrolysis reaction occurs resulting in partially or fully hydrolyzed species, (c) the resultant fully or partially hydrolyzed species can combine to form mixtures of multifunctional oligomeric siloxane species, (d) the oligomeric siloxane species may or may not contain pendant hydroxy and pendant alkoxy moieties and will be comprised of a silicon-oxygen matrix which contains both silicon oxygen siloxane linkages and silicon-oxygen carboxylic acid component linkages, (e) the resultant mixtures are dynamic oligomeric suspensions that undergo structural changes which are dependent upon a multitude of factors including: temperature, pH, water content, catalyst concentration, and the like.

An embodiment that is not part of the claimed invention relates to an aqueous-organic solvent mixture containing from about 10 to about 90 weight percent, based on the total solids of the composition, of a mixture of hydrolysis products and partial condensates of an epoxy-functional silane, from about 1 to about 90 weight percent, based on the total weight of the composition, of a carboxylic acid functional compound selected from the group consisting of carboxylic acids, multifunctional carboxylic acids, anhydrides, and combinations thereof, from about 1 to 90 weight percent, based on the total solids of the composition, of a metal oxide composite colloid, and from about 1 to 75 weight percent, based on the total solids of the composition, of a colloidal silica material. The amount of epoxy-functional silane, carboxylic acid component, metal oxide composite sol, and colloidal silica employed can vary widely and will generally be dependent upon the properties desired in the coating composition and the cured coating, as well as the end use of the substrate to which the coating composition is applied. Generally, however, desirable results can be obtained where the molar ratio of the epoxy-functional silane component to the colloidal silica component and the colloidal metal oxide component are present in the coating composition at a ratio of from about 0.05:1 to about 2:1 and the molar ratio of the colloidal silica component to the metal oxide composite colloid present in the coating composition is present in a range of from about 0.01:1 to about 50:1.

The coating composition of the present invention comprises an aqueous-organic solvent mixture containing from about 10 to about 90 weight percent, based on the total solids of the composition, of a mixture of hydrolysis products and partial condensates of an epoxy-functional silane, from about 1 to about 90 weight percent, based on the total weight of the composition, of a carboxylic acid functional compound selected from the group consisting of carboxylic acids, multifunctional carboxylic acids, anhydrides, and combinations thereof, from about I to 90 weight percent, based on the total solids of the composition, of a metal oxide composite colloid, and from about I to 75 weight percent, based on the total solids of the composition, of a disilane. The amount of epoxy-functional silane, carboxylic acid component, metal oxide composite sol, and disilane employed can vary widely and will generally be dependent upon the properties desired in the coating composition and the cured coating, as well as the end use of the substrate to which the coating composition is applied. Generally, however, desirable results can be obtained where the molar ratio of the epoxy-functional silane component to the disilane component, and the colloidal metal oxide component are present in the coating composition at a ratio of from about 0.05:1 to 2:1 and the molar ratio of the disilane silane component to the metal oxide composite colloid present in the coating composition is present in a range of from about 0.01:1 to about 50:1.

An embodiment that is not part of the claimed invention relates to an aqueous-organic solvent mixture containing from about 10 to about 90 weight percent, based on the total weight of the composition, of a mixture of hydrolysis products and partial condensates of an epoxy-functional silane, from about 1 to about 90 weight percent, based on the total weight of the composition, of a carboxylic acid functional compound selected from the group consisting of carboxylic acids, multifunctional carboxylic acids, anhydrides, and combinations thereof, from about 1 to 90 weight percent, based on the total solids of the composition, of a metal oxide composite colloid, from about 1 to 75 weight percent, based on the total solids of the composition, of a colloidal silica material, and from about 1 to 75 weight percent, based on the total solids of the composition, of a tetrafunctional silane. The amount of epoxy-functional silane, carboxylic acid component, metal oxide composite sol, colloidal silica, and tetrafunctional silane employed can vary widely and will generally be dependent upon the properties desired in the coating composition and the cured coating, as well as the end use of the substrate to which the coating composition is applied. Generally, however, desirable results can be obtained where the molar ratio of the epoxy-functional silane component to the colloidal silica component, tetrafunctional silane component, and the colloidal metal oxide component are present in the coating composition at a ratio of from about 0.05:1 to 2:1, the molar ratio of the colloidal silica component to the metal oxide composite colloid present in the coating composition is present in a range of from about 0.01:1 1 to about 50:1, and the molar ratio of the tetrafunctional silane component to the metal oxide composite colloid present in the coating composition is present in a range of from about 0.01 to 1 to about 50:1.

While the presence of water in the aqueous-organic solvent mixture is necessary to form hydrolysis products of the silane components of the mixture, the actual amount of water can vary widely. However, a sufficient amount of water must be present in the aqueous-organic solvent mixture to provide a substantially homogeneous coating mixture of hydrolysis products and partial condensates of the alkoxy functional silanes (i.e., the epoxy-functional silane and other silane additive components) which, when applied and cured on an article, provides a substantially transparent coating. Such coatings can be obtained by employing a stoichiometric amount of water, e.g., the amount of water as required for the hydrolysis of the sum of the hydrolyzable alkoxy groups on the alkoxy silane components in the coating mixture. The abrasion resistance of the coated article is affected by the concentration of water in the incipient coating mixture as well as the presence and concentration of a condensation catalyst. For example, coating mixtures which contain a low concentration of water (e.g. a stoichiometric concentration of water) require a optional mineral acid hydrolysis co-catalyst to ensure sufficient hydrolysis necessary for the formation of a homogeneous coating mixture and a condensation catalyst to obtain coating compositions which possess the desired abrasion resistance properties after curing. It is preferred that the amount of water present in the aqueous-organic solvent mixture range from about 1 to about 10 equivalents of water for each hydrolyzable alkoxy group. The effective amount of water and the effective amount and type of catalyst can be determined empirically.

The solvent constituent of the aqueous-organic solvent mixture of the coating compositions of the present invention can be any solvent or combination of solvents which is compatible with the epoxy-functional silane, the carboxylic acid component, the colloidal metal oxide component, the colloidal silica component, the disilane, and the tetrafunctional silane. For example, the solvent constituent of the aqueous-organic solvent mixture may be an alcohol, an ether, a glycol or a glycol ether, a ketone, an ester, a glycol ether acetate and mixtures thereof Alcohols which can be employed as the solvent constituent are represented by the formula ROH where R is an alkyl group containing from 1 to about 10 carbon atoms. Examples of alcohols which can be employed as the solvent constituent of the aqueous-organic solvent mixture employed in the practice of the present invention are methanol, ethanol, propanol, isopropanol, butanol, isobutanol, secondary butanol, tertiary butanol, cyclohexanol, pentanol, octanol, decanol, and mixtures thereof.

Glycols, ethers, and glycol ethers which can be employed as the solvent constituent of the aqueous-organic solvent mixture are represented by the formula R¹-(OR²)ₓ-OR¹ where x is 0, 1, 2, 3 or 4, R¹ is hydrogen or an alkyl group containing from 1 to about 10 carbon atoms and R² is an alkylene group containing from 1 to about 10 carbon atoms and combinations thereof.

Examples of glycols, ethers and glycol ethers having the above-defined formula and which may be used as the solvent constituent of the aqueous-organic solvent mixture of the coating compositions of the present invention are di-n-butylether, ethylene glycol dimethyl ether, propylene glycol dimethyl ether, propylene glycol methyl ether, dipropylene glycol methyl ether, tripropylene glycol methyl ether, dipropylene glycol dimethyl ether, tripropylene glycol dimethyl ether, ethylene glycol butyl ether, diethylene glycol butyl ether, ethylene glycol dibutyl ether, ethylene glycol methyl ether, diethylene glycol ethyl ether, diethylene glycol dimethyl ether, ethylene glycol ethyl ether, ethylene glycol diethyl ether, ethylene glycol, diethylene glycol, triethylene glycol, propylene glycol, dipropylene glycol, tripropylene glycol, butylene glycol, dibutylene glycol, tributylene glycol and mixtures thereof. In addition to the above, cyclic ethers such as tetrahydrofuran and dioxane are suitable ethers for the aqueous-organic solvent mixture.

Examples of ketones suitable as the organic solvent constituent of the aqueous-organic solvent mixture are acetone, diacetone alcohol, methyl ethyl ketone, cyclohexanone, methyl isobutyl ketone and mixtures thereof.

Examples of esters suitable as the organic solvent constituent of the aqueous-organic solvent mixture are ethyl acetate, n-propyl acetate, n-butyl acetate and combinations thereof.

Examples of glycol ether acetates suitable as the organic solvent constitutent of the aqueous-organic solvent mixture are propylene glycol methyl ether acetate, dipropylene glycol methyl ether acetate, ethyl 3-ethoxypropionate, ethylene glycol ethyl ether acetate and combinations thereof.

An embodiment that is not part of the claimed invention relates to coating compositions comprising any epoxy-functional silane which is compatible with the carboxylic acid component, the metal oxide composite colloid, and the colloidal silica components of the coating composition, and which provides a coating composition which, upon curing, produces a substantially transparent, abrasion resistant coating which exhibits improved adhesion and improved resistance to crack formation and which possesses a refractive index substantially corresponding to the refractive index of the substrate on which the coating composition is applied. Generally, such epoxy-functional silanes are represented by the formula R³ₓSi (OR⁴)₄₋ₓ where x is an integer of 1,2 or 3, R³ is H, an alkyl group, a functionalized alkyl group, an alkylene group, an aryl group, an alkyl ether, and combinations thereof containing from 1 to about 10 carbon atoms and having at least 1 epoxy-functional group, and R⁴ is H, an alkyl group containing from 1 to about 5 carbon atoms, an acetyl group, a-Si (OR⁵)_{3-y} R⁶_{y} group where y is an integer of 0, 1, 2, or 3, and combinations thereof where R⁵ is H, an alkyl group containing from I to about 5 carbon atoms, an acetyl group, or another -Si (OR⁵)_{3-y} R⁶_{y} group and combinations thereof, and R⁶ is H, an alkyl group, a functionalized alkyl group, an alkylene group, an aryl group, an alkyl ether, and combinations thereof containing from I to about 10 carbon atoms which may also contain an epoxy-functional group.

The epoxy-functional silane useful in the formulation of the coating composition of the present invention can be any epoxy-functional silane compatible with the carboxylic acid component, the metal oxide composite colloid, and the disilane component of the coating composition which provides a coating composition that, upon curing, produces a substantially transparent, abrasion resistant coating with a refractive index substantially corresponding to the refractive index of the substrate to which the coating composition is applied and which exhibits improved adhesion and improved resistance to crack formation. Generally, such epoxy-functional silanes are represented by the formula R³ₓSi (OR⁴)₄₋ₓ where x is an integer of 1, 2 or 3, R³ is H, an alkyl group, a functionalized alkyl group, an alkylene group, an aryl group, an alkyl ether, and combinations thereof containing from I to about 10 carbon atoms and having at least I epoxy-functional group, and R⁴ is H, an alkyl group containing from I to about 5 carbon atoms, an acetyl group, a -Si (OR⁵)_{3-y} R⁶_{y} group where y is an integer of 0, 1, 2, or 3, and combinations thereof where R⁵ is H, an alkyl group containing from 1 to about 5 carbon atoms, an acetyl group, or another -Si (OR⁵)_{3-y} R⁶_{y} group and combinations thereof, and R⁶ is H, an alkyl group, a functionalized alkyl group, an alkylene group, an aryl group, an alkyl ether, and combinations thereof containing from 1 to about 10 carbon atoms which may also contain an epoxy-functional group. An embodiment that is not part of the claimed invention relates to coating composition comprising any epoxy-functional silane which is compatible with the carboxylic acid component, the metal oxide composite colloid, the colloidal silica components, and the tetrafunctional silane component of the coating composition, and which provides a coating composition which, upon curing, produces a substantially transparent, abrasion resistant coating which exhibits improved adhesion and improved resistance to crack formation and which possesses a refractive index substantially corresponding to the refractive index of the substrate on which the coating composition is applied. Generally, such epoxy-functional silanes are represented by the formula R³ₓSi (OR⁴)₄₋ₓ where x is an integer of 1, 2 or 3, R³ is H, an alkyl group, a functionalized alkyl group, an alkylene group, an aryl group, an alkyl ether, and combinations thereof containing from 1 to about 10 carbon atoms and having at least 1 epoxy-functional group, and R⁴ is H, an alkyl group containing from 1 to about 5 carbon atoms, an acetyl group, a -Si (OR⁵)_{3-y} R⁶_{y} group where y is an integer of 0, 1, 2, or 3, and combinations thereof where R⁵ is H, an alkyl group containing from 1 to about 5 carbon atoms, an acetyl group, or another -Si (OR⁵)_{3-y} R⁶_{y} group and combinations thereof, and R⁶ is H, an alkyl group, a functionalized alkyl group, an alkylene group, an aryl group, an alkyl ether, and combinations thereof containing from 1 to about 10 carbon atoms which may also contain an epoxy-functional group.

Examples of such epoxy-functional silanes are glycidoxy methyltrimethoxysilane, 3-glycidoxypropyltrihydroxysilane, 3-glycidoxypropyldimethylhydroxysilane, 3- glycidoxypropyltrimethoxysilane, 3-glycidoxypropyltriethoxysilane, 3- glycidoxypropyldimethoxymethylsilane, 3-glycidoxypropyldimethylmethoxysilane, 3-glycidoxypropyltributoxysilane, 1,3-bis(glycidoxypropyl) tetramethyldisiloxane, 1,3-bis(glycidoxypropyl)tetramethoxydisiloxane, 1,3-bis(glycidoxypropyl)-1,3-dimethyl-1,3-dimethoxydisiloxane, 2,3-epoxypropyltnmethoxysilane, 3,4-epoxybutyltrimethoxysilane, 6,7-epoxyheptyltrimethoxysilane, 9,10-epoxydecyltrimethoxysilane, 1,3-bis(2,3-epoxypropyl)tetramethoxydisiloxane, 1,3-bis(6,7-epoxy-heptyl)tetramethoxydisiloxane, 2-(3,4-epoxycyclohexyl)ethyltrimethoxysilane, and the like.

The coating compositions of the present invention contain any carboxylic acid component compatible with the epoxy-functional silane, the colloidal metal oxide component, and the optional colloidal silica component, the optional tetrafunctional silane, and/or the disilane. The carboxylic acid component is capable of interacting with the hydrolysis products and partial condensates of the epoxy-functional silane and the optional tetrafunctional silane to provide coating compositions which, upon curing, produce a substantially transparent, abrasion resistant coatings having improved adhesion and improved crack resistance and which possess a refractive index substantially corresponding to the refractive index of the substrate on which the coatings are applied.

Carboxylic acid component as used herein is understood to include mono- and multi-functional carboxylic acids as well as anhydrides, which produce mono- and multi- functional carboxylic acids. Generally, the carboxylic acid functional compound is represented by the formula R⁷(COOR⁸)ₓ, where x is an integer of 1, 2, 3, or 4, and where R⁷ is H, an alkyl group, a functionalized alkyl group, an alkylene group, an aryl group, a functionalized aryl group, an alkyl ether, and combinations thereof containing from 1 to about 10 carbon atoms, and where R⁸ is H, a formyl group, a carbonyl group, or an acyl group, where the acyl group can be functionalized with an alkyl group, a functionalized alkyl group, an alkylene group, an aryl group, a functionalized aryl group, an alkyl ether, and combinations thereof containing from 1 to about 10 carbon atoms, and where R⁷ and R⁸ may or may not be joined by a chemical bond. Examples of carboxylic acids which can be in the coating composition of the present invention include acetic acid, acrylic acid, methacrylic acid, formic acid, propionic acid, butanoic acid, benzoic acid, malic acid, aconitic acid (cis,trans), itaconic acid, succinic acid, malonic acid, glutaric acid, adipic acid, pimelic acid, suberic acid, azelaic acid, sebacic acid, cyclohexyl succinic acid, 1,3,5 benzene tricarboxylic acid, 1,2,4,5 benzene tetracarboxylic acid, 1,4-cyclohexanedicarboxylic acid, 1,3-cyclohexanedicarboxylic acid, 1,1-cyclohexanediacetic acid, 1,3-cyclohexanediacetic acid, 1,3,5-cyclohexanetricarboxylic acid and unsaturated dibasic acids such as fumaric acid and maleic acid and combinations thereof.

Examples of anhydrides which can be employed to produce the carboxylic acid component of the coating compositions of the present invention include the anhydrides of the above mentioned carboxylic acids such as acetic anhydride, propionic anhydride, acrylic anhydride, methacrylic anhydride and the cyclic anhydrides of the above mentioned dibasic acids such as succinic anhydride, itaconic anhydride, glutaric anhydride, trimellitic anhydride, pyromellitic anhydride, phthalic anhydride and maleic anhydride and combinations thereof.

Optionally, in addition to the carboxylic acid component of the coating composition, a mineral acid such as, for example, hydrochloric acid or nitric acid, can be used as a co-hydrolysis catalyst for the hydrolysis of the silane compounds described herein.

The disilane components of the coating compositions of the present invention can be any disilane which is compatible with the carboxylic acid component, the metal oxide composite colloid, and the epoxy functional silane component of the coating composition and which provides a coating composition which, upon curing, produces a substantially transparent, abrasion resistant coating having a refractive index substantially corresponding to the refractive index of the substrate to which the coating composition is applied and which exhibits improved adhesion and improved resistance to crack formation. Generally, such disilanes are represented by the formula (R⁷O)ₓR⁸₃₋ₓSi-R⁹_{y}-SiR¹⁰₃₋ₓ(OR¹¹)ₓ; where x is 0, 1, 2 or 3 and y is 0 or 1; R⁸ and R¹⁰ are either H or an alkyl group containing from about 1 to 10 carbon atoms, a functionalized alkyl group, an alkylene group, an aryl group, an alkylpolyether group and combinations thereof; R⁷ and R¹¹ are either H, an alkyl group containing from about 1 to 10 carbon atoms, an acetyl group, and combinations thereof. If y is 1 then R⁹ can be an alkylene group containing from about 1 to 12 carbon atoms, an alkylenepolyether containing from about 1 to 12 carbon atoms, an aryl group, an alkylene substituted aryl group, an alkylene group which may contain one or more olefins, or an oxygen or sulfur atom. If x = 0 then R⁸ and R¹⁰ must be a chlorine or bromine atom. If y=0 then there is a direct silicon-silicon bond.

Examples ofdisilanes satisfying the above defined formula include; bis(triethoxysilyl)ethane, bis(triethoxysilyl)methane, bis(trichlorosilyl)methane, bis(triethoxysilyl)ethylene, 1,3 bistriethoxysilylethane, hexaethoxydisiloxane, hexaethoxy-disilane.

The metal oxide colloidal component of the present invention may consist of a single component metal oxide colloid or a complex composite metal oxide colloid consisting of more than one metal oxide component. The refractive index of the colloidal metal oxide component should be sufficiently higher than the coating mixture so the addition of effective amounts of the colloidal metal oxide component can yield a desirable refractive index for the entire coating composition. The colloidal metal oxide component may contain any combination of titania, zirconia, tin oxide, antimony oxide, iron oxide, lead oxide, and/or bismuth oxide for purposes of increasing the refractive index. The colloidal metal oxide component may also contain alumina and/or silica. In general, it is preferred that the colloidal metal oxide component used in the present invention consist of a composite mixture of two or more metal oxide components listed above where at least one of the metal oxide components present in the composite mixture is neither alumina nor silica. Examples of commercially available metal oxide colloidal materials and composite metal oxide component materials are the Suncolloid series AMT-130S, HIS-33M, HIT-30M, and HIT-32M from Nissan Chemical Industries LTD., Optolake 1130F-2 (A-8), 2130F-2 (A-8), and Optolake ARC-7, and Queen Titanic-11-1 from Catalyst and Chemical Industries LTD. Proper selection of the amounts and type of the colloidal metal oxide component, the epoxy-functional silane, the carboxylic acid component, the colloidal silica component, the tetrafunctional silane component, the disilane component, and if desired, the optional silane component and condensation catalyst will yield a cured coating material with a refractive index in the range from 1.4 to greater than 1.7.

The optional colloidal silica component of the present invention can be either an aqueous or non-aqueous based material. The collodial silica component may expect in the coating composition from about 0.1 to 75 weight percent, based on the total solids of the composition. The colloidal silica is an aqueous or non-aqueous solvent dispersion of particulate silica and the various products differ principally by particle size, silica concentration, pH, presence of stabilizing ions, solvent makeup, and the like. Colloidal silica is commercially available under a number of different tradename designations, including Nalcoag® (Nalco Chemical Co., Naperville, IL); Nyacol® (Nyacol Products, Inc., Ashland, MA); Snowtex® (Nissan Chemical Industries, LTD., Tokyo, Japan); Ludox® (DuPont Company, Wilmington, Delaware); and Highlink OG® (Hoechst Celanese, Charlotte,NC). It should be noted that substantially different product properties can be obtained through the selection of different colloidal silicas.

Colloids which possess acidic pH values and very slightly basic pH values with low levels of sodium are preferred. These colloidal silica materials provide an increase in the abrasion resistance and provide a resistance to crack formation, which can result from exposure of the cured coatings to boiling tap water tint baths, vide supra. Examples of preferred colloidal silica materials are Nalco® 1042 and Nalco® 1040 and the like. Basic colloidal silica materials which possess higher pH values and/or a higher concentration of sodium ions result in cured coating compositions which possess abrasion resistance which is lower than that which results from the use of the preferred colloidal silica materials and are not preferred. An example of a material, which is not preferred is Nalco® 1115 and the like.

The additional tetrafunctional silanes useful in the formulation of the coating compositions of the present invention are represented by the formula Si(OR⁷)₄ where R⁷ is H, an alkyl group containing from 1 to about 5 carbon atoms and ethers thereof, an (OR⁷) carboxylate, a -Si(OR⁸)₃ group where R⁸ is a H, an alkyl group containing from 1 to about 5 carbon atoms and ethers thereof, an (OR⁷) carboxylate, or another -Si(OR⁸)₃ group and combinations thereof. Examples of tetrafunctional silanes represented by the formula Si(OR⁷)₄ are tetramethyl orthosilicate, tetraethyl orthosilicate, tetrapropyl orthosilicate, tetraisopropyl orthosilicate, tetrabutyl ortho-silicate, tetraisobutyl orthosilicate, tetrakis(methoxyethoxy) silane, tetrakis(methoxypropoxy)silane, tetrakis(ethoxyethoxy) silane, tetrakis(methoxyethoxyethoxy)silane, trimethoxyethoxy-silane, dimethoxydiethoxysilane, triethoxymethoxysilane, poly(dimethoxysiloxane), poly(diethoxysiloxane), poly(dimethoxy-diethoxysiloxane), tetrakis(trimethoxysiloxy)silane, tetrakis-(tnethoxysiloxy)silane, and the like. In addition to the R⁷ and R⁸ substituants described above for the tetrafunctional silane, R⁷ and R⁸ taken with oxygen (OR⁷) and (OR⁸) can be carboxylate groups. Examples of tetrafunctional silanes with carboxylate functionalities are silicon tetracetate, silicon tetrapropionate and silicon tetrabutyrate.

The coating compositions of the present invention are also stable with respect to aging, both in terms of performance and solution stability. The aging of the coating compositions is characterized by a gradual increase in viscosity, which eventually renders the coating compositions unusable due to processing constraints. The coating compositions of the present invention, when stored at temperatures of 5 ° C or lower have usable shelf lives of 3-4 months. During this period, the abrasion resistance of the cured coatings does not significantly decrease with time. The coating compositions may optionally include other materials which may: (a) enhance the stability of the coating compositions; (b) increase the abrasion resistance of cured coatings produced by the coating compositions; (c) improve processing of the coating compositions; and (d) provide other desirable properties to the coating composition and the cured product of the coating compositions.

Tetrafunctional silanes may also be useful in addition to the formulation of the coating compositions of the present invention and may exist from about 0.1 to about 75 weight percent based on the total solids of the composition. The tetrafunctional silanes are represented by the formula Si(OR⁷)₄ where R⁷ is H, an alkyl group containing from 1 to about 5 carbon atoms and ethers thereof, an (OR⁷) carboxylate, a -Si(OR⁸)₃ group where R⁸ is a H, an alkyl group containing from I to about 5 carbon An embodiment that is not part of the claimed invention relates to abrasion resistant coating compositions which provide index matching properties achieved through the unique combination of an epoxy-functional silane, a carboxylic acid component, a composite metal oxide colloid, a colloidal silica component, and in some compositions, a tetrafuncitional silane. atoms and ethers thereof, an (OR⁷) carboxylate, or another -Si(OR⁸)₃ group and combinations thereof. Examples of tetrafunctional silanes represented by the formula Si(OR⁷)₄ are tetramethyl orthosilicate, tetraethyl orthosilicate, tetrapropyl orthosilicate, tetraisopropyl orthosilicate, tetrabutyl ortho-silicate, tetraisobutyl orthosilicate, tetrakis(methoxyethoxy) silane, tetrakis(methoxypropoxy)silane, tetrakis(ethoxyethoxy) silane, tetrakis(methoxyethoxyethoxy)silane, trimethoxyethoxy-silane, dimethoxydiethoxysilane, triethoxymethoxysilane, poly- (dimethoxysiloxane), poly(diethoxysiloxane), poly(dimethoxy-diethoxysiloxane), tetrakis(trimethoxysiloxy)silane, tetrakis-(triethoxysiloxy)silane, and the like. In addition to the R⁷ and R⁸ substituants described above for the tetrafunctional silane, R⁷ and R⁸ taken with oxygen (OR⁷) and (OR⁸) can be carboxylate groups. Examples of tetrafunctional silanes with carboxylate functionalities are silicon tetracetate, silicon tetrapropionate and silicon tetrabutyrate.

The coating compositions of the present invention may further include from about 0.1 to about 50 weight percent, based on the weight oftotal solids of the coating compositions, of a mixture of hydrolysis products and partial condensates of one or more silane additives (i.e, trifunctional silanes, difunctional silanes, monofunctional silanes, and mixtures thereof). The selection of the silane additives will depend upon the particular properties to be enhanced or imparted to either the coating composition or the cured coating composition. The silane additives which can be incorporated into the coating compositions of the present invention are represented by the formula R⁷ₓSi(OR⁸)₄₋ₓ where x is a 1, 2 or 3; R⁷ is H, or an alkyl group containing from 1 to about 10 carbon atoms, a functionalized alkyl group, an alkylene group, an aryl group an alkyl ether group and combinations thereof; R⁸ is H, an alkyl group containing from 1 to about 10 carbon atoms, an acetyl group, a -Si(OR⁸)₃ group and combinations thereof.

Examples of silane additives represented by the above-defined formula are methyltrimethoxysilane, ethyl-trimethoxysilane, propyltrimethoxysilane, butyltrimethoxysilane, isobutyltrimethoxysilane, hexyltrimethoxysilane, octyltrimethoxy-silane, decyltrimethoxysilane, cyclohexyltrimethoxysilane, cyclo-hexylmethyltrimethoxysilane, 3-methacryloxypropyltrimethoxysilane, vinyltrimethoxysilane, allyltrimethoxysilane, dimethyldimethoxy-silane, 2-(3-cyclohexenyl)ethyltrimethoxysilane, 3-cyanopropyltrimethoxysilane, 3-chloropropyltrimethoxysilane, 2-chloroethyl-trimethoxysilane, phenethyltrimethoxysilane, 3-mercaptopropyl-trimethoxysilane, 3-aminopropyltrimethoxysilane, phenyltrimeth-oxysilane, 3-isocyanopropyltrimethoxysilane, N-(2-aminoethyl)-3-aminopropyltrimethoxysilane, 4-(2-aminoethylaminomethyl)phenethyl-trimethoxysilane, chloromethyltriethoxysilane, 2-chloro-ethyltriethoxysilane, 3-chloropropyltriethoxysilane, phenyltriethoxysilane, ethyltriethoxysilane, propyltriethoxysilane, butyltriethoxysilane, isobutyltriethoxysilane, hexyltriethoxy-silane, octyltriethoxysilane, decyltriethoxysilane, cyclohexyltriethoxysilane, cyclohexylmethyltriethoxysilane, 3-methacryloxy-propyltriethoxysilane, vinyltriethoxysilane, allyltriethoxysilane, [2-(3-cyclohexenyl)ethyltriethoxysilane, 3-cyanopropyltriethoxy-silane, 3-methacrylamidopropyltriethoxysilane, 3-methoxypropyltrimethoxysilane, 3-ethoxypropyltrimethoxysilane, 3-propoxy-propyltrimethoxysilane, 3-methoxyethyltrimethoxysilane, 3-ethoxy-ethyltrimethoxysilane, 3-propoxyethyltrimethoxysilane, 2-[methoxy-(polyethyleneoxy)propyl]heptamethyltrisiloxane, [methoxy(polyethyleneoxy)propyl]trimethoxysilane, [methoxy(polyethylene-oxy)ethyl]trimethoxysilane, [methoxy(polyethyleneoxy)propyl]-triethoxysilane, [methoxy(polyethyleneoxy)ethyl]triethoxysilane, and the like.

Although a condensation catalyst is not an essential ingredient of the coating compositions of the present invention, the addition of a condensation catalyst can affect abrasion resistance and other properties of the coating including stability, tinting capacity, porosity, cosmetics, caustic resistance, water resistance and the like. When employing a condensation catalyst, the amount of catalyst used can vary widely, but will generally be present in an amount from about 0.05 to about 20 weight percent, based on the total solids of the composition.

Examples of catalysts which can be incorporated into the coating compositions of the present invention are (i) metal acetylacetonates, (ii) diamides, (iii) imidazoles, (iv) amines and ammonium salts, (v) organic sulfonic acids and their amine salts, (vi) alkali metal salts of carboxylic acids, (vii) alkali metal hydroxides, (viii) fluoride salts, and (ix) organostannanes. Thus, examples of such catalysts include for group (i) such compounds as aluminum, zinc, iron and cobalt acetylacetonates; group (ii) dicyandiamide; for group (iii) such compounds as 2-methylimidazole, 2-ethyl-4-methylimidazole and 1-cyanoethyl-2-propylimidazole; for group (iv), such compounds as benzyldimethylamine, and 1,2-diaminocyclohexane; for group (v), such compounds as trifluoromethanesulfonic acid; for group (vi), such compounds as sodium acetate, for group (vii), such compounds as sodium hydroxide, and potassium hydroxide, for group (viii), tetra n-butyl ammonium fluoride, and for group (ix), dibutyltin dilaurate, and the like.

An effective amount of a leveling or flow control agent can be incorporated into the composition to more evenly spread or level the composition on the surface of the substrate and to provide substantially uniform contact with the substrate. The amount of the leveling or flow control agent can vary widely, but generally is an amount sufficient to provide the coating composition with from about 10 to about 50,000 ppm of the leveling or flow control agent. Any conventional, commercially available leveling or flow control agent which is compatible with the coating composition and the substrate and which is capable of leveling the coating composition on a substrate and which enhances wetting between the coating composition and the substrate can be employed. The use of leveling and flow control agents is well known in the art and has been described in the "Handbook of Coating Additives" (ed. Leonard J. Calbo, pub. Marcel Dekker), pg 119-145.

Examples of such leveling or flow control agents which can be incorporated into the coating compositions of the present invention include organic polyethers such as TRITON X-100, X-405, N-57 from Rohm and Haas, silicones such as Paint Additive 3, Paint Additive 29, Paint Additive 57 from Dow Corning, SILWET L-77, and SILWET L-7600 from OSi Specialties, and fluorosurfactants such as FLUORAD FC-171, FLUORAD FC-430 and FLUORAD FC-431 from 3M Corporation.

In addition, other additives can be added to the coating compositions of the present invention in order to enhance the usefulness of the coating compositions or the coatings produced by curing the coating compositions. For example, ultraviolet absorbers, antioxidants, and the like can be incorporated into the coating compositions of the present invention, if desired.

The coating compositions of the present invention can be prepared by a variety of processes to provide stable coating compositions, which, upon curing, produce substantially transparent abrasion resistant coatings having improved abrasion resistance, resistance to crack formation, and a matched refractive index.

An embodiment that is not part of the claimed invention relates to a method for preparing coating compositions consisting of the initial hydrolysis of the epoxy-functional silane by addition of the silane to a mixture of deionized water, the acid component, and the solvent constituent. Thereafter the colloidal silica component is added. After sufficient hydrolysis the metal oxide colloid is added in a dropwise manner to the stirred aqueous organic mixture to ensure maximum homogeneity. When desired an optional condensation catalyst and/or a surfactant for leveling and flow improvement may be added to the final coating composition.

The preferred method for preparing the formation of the coating composition of the present invention consists of the initial hydrolysis of the epoxy-functional silane by addition of the silane to a mixture of deionized water, the acid component, and the solvent constituent. After sufficient time for the hydrolysis, the disilane is added and the resultant mixture is allowed to stir for a sufficient period of time for hydrolysis. When desired, a condensation catalyst and/or a surfactant for leveling and flow improvement may be added to the final coating composition.

An embodiment that is not part of the claimed invention relates to a method for preparing another formulation of the coating composition consisting of the initial hydrolysis of the epoxy-functional silane by addition of the silane to a mixture of deionized water, the acid component, and the solvent constituent. After sufficient time for the hydrolysis, the tetrafunctional silane is added and the resultant mixture is allowed to stir for a sufficient period of time to allow for hydrolysis of the tetrafunctional silane. To this mixture colloidal silica is then added followed by slow addition of the metal oxide colloid to insure maximum homogeneity. When desired, a condensation catalyst and/or a surfactant for leveling and flow improvement may be added to the final coating composition.

The coating compositions of the present invention can be applied to solid substrates by conventional methods, such as flow coating, spray coating, curtain coating, dip coating, spin coating, roll coating, etc. to form a continuous surface film. Any substrate compatible with the compositions can be coated with the compositions, such as plastic materials, wood, paper, metal, printed surfaces, leather, glass, ceramics, glass ceramics, mineral based materials and textiles. The compositions are especially useful as coatings for synthetic organic polymeric substrates in sheet or film form, such as acrylic polymers, poly (ethyleneterephthalate), polycarbonates, polyamides, polyimides, copolymers of acrylonitrile-styrene, styrene-acrylonitrile-butadiene copolymers, polyvinyl chloride, butyrates, polyethylene and the like. Transparent polymeric materials coated with these compositions are useful as flat or curved enclosures, such as windows, liquid crystal display screens, skylights and windshields, especially for transportation equipment. Plastic lenses, such as acrylic or polycarbonate ophthalmic lenses, can also be coated with the compositions of the invention.

By choice of proper formulation, application conditions and pretreatment (including the use of primers) of the substrate, the coating compositions of the present invention can be adhered to substantially all solid surfaces. Abrasion resistant coatings having improved adhesion and resistance to cracking can be obtained from coating compositions of the present invention by heat curing at temperatures in the range of from about 50 ° C to about 200 °C for a period of from about 5 minutes to about 18 hours. The coating thickness can be varied by means of the particular application technique, but coatings having a thickness of from about 0.5 to about 20 microns, and more desirably from about 1 to about 10 microns, are generally utilized.

In order to further illustrate the present invention, the following examples are given. However, it is to be understood that the examples are for illustrative purposes only and are not to be construed as limiting the scope of the subject invention.

### EXAMPLES

### Procedure

Etched poly(diethylene glycol-bis-allyl carbonate) lenses and plaques (referred to as ADC lenses or ADC plaques) were used for coating and testing. The ADC lenses and plaques were etched by contact with a 10 % potassium hydroxide solution containing propylene glycol methyl ether and water for a period of about 10 minutes. The lenses and/or plaques were coated by dip coating using a specified withdrawal rate in units of inches per minute (ipm). The lenses and/or plaques were cured at a temperature of 110 C for 3 hours. The lenses and/or plaques were subjected to the aforementioned test procedures to determine adhesion, resistance to cracking and abrasion resistance. The 1.7 R₁ glass plaques were cleaned by etching in 20 percent KOH followed by rinsing with D.I. water. The coating was applied to the 1.7 R₁ plaques by dipping at 2 ipm followed by curing for 1 hour at 110°C. The R₁ was measured according to the procedure described vide supra. **Example 1 (comparative):** 63.0 grams of 3-glycidoxypropyltrimethoxy silane (GPTMS) were added dropwise to a solution composed of 94.4 grams of deionized water, 94.4 grams of propylene glycol methyl ether (PMOH), and 10.0 grams of acetic acid (AcOH). The aqueous-organic GPTMS mixture was stirred for 1 hour. 33.6 grams of Nalco-1042 colloidal silica were added dropwise and the resulting mixture was stirred overnight. To this mixture, 104.7 grams of Optalake 2130f-2 (A-8), a colloidal metal oxide, were added dropwise and the resulting mixture was stirred for an additional 4 hours to yield a coating composition.

**Example 1A (comparative)**: 1.4 grams of a flow modifier comprising a PMOH-based solution containing 10 weight percent. FC-430(3M) were added to 190 grams of a coating composition prepared in accordance with the process described in example 1. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.9 microns, a refractive index of about 1.60, and a Bayer number of 6.5.

**Example 2 (comparative):** 63.0 grams of GPTMS were added dropwise to a solution composed of 99.7 grams of deionized water, 99.7 grams of PMOH, and 10.0 grams of AcOH. The aqueous-organic GPTMS mixture was stirred for 1 hour. 22.9 grams ofNalco-1050 colloidal silica were added dropwise and the resulting mixture was stirred overnight. To this mixture, 104.8 grams of Optalake 2130f-2 (A-8), a colloidal metal oxide, were added dropwise and the resulting mixture was stirred for an additional 4 hours to yield a coating composition.

**Example 2A (comparative):** 1.4 grams of a flow modifier comprising a PMOH-based solution containing 10 weight percent FC-430(3M) were added to 190 grams of a coating composition prepared in accordance with the process described in example 2. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 2 microns, a refractive index of about 1.60, and a Bayer number of 3.6.

**Example 3a (comparative):** 26.8 grams of GPTMS were added dropwise to a stirring 50.0 grams of deionized water. The aqueous-organic GPTMS mixture was stirred for 1 hour. A solution of 4.6 grams of ITA dissolved in 50 grams of PMOH was added quickly to the mixture followed by 30 minutes of stirring. To the resultant mixture, 14.3 grams of Nalco-1034A colloidal silica were added dropwise and allowed to stir for approximately 4 hours. 44.4 grams of Optalake 2130f-2 (A-8), a colloidal metal oxide, were added dropwise and the resulting mixture was stirred overnight to yield a coating composition. 0.14 grams of a surfactant solution, 10% PA-57 in PMOH, were added to the coating composition. To insure complete mixing, the coating mixture was stirred for an additional 10 to 30 minutes. This coating composition was applied to etched ADC lenses, ADC plaques and 1.7 R₁ plaques, according to the procedure above, at a withdrawal rate of 2 ipm to provide a cured coating having a thickness of about 1.8 microns, a refractive index of about 1.60, and a Bayer number of 5.0.

**Example 3b (comparative)**: 53.9 grams of GPTMS were added dropwise to a solution composed of 107.5 grams of deionized water, 29.9 grams of PMOH, and 9.2 grains of itaconic acid. The aqueous-organic GPTMS mixture was stirred for 1 hour. 28.8 grams of Nalco-1042 colloidal silica were added dropwise and the resulting mixture was stirred for approximately 4 hours. To this mixture, 89.3 grams of Optalake 2130f-2 (A-8), a colloidal metal oxide, were added dropwise and the resulting mixture was stirred overnight to yield a coating composition. A solution consisting of 3.8 grams of DCDA dissolved in 77.6 grams of PMOH were added to the above coating composition. After stirring for 23 hours, 0.3 grams of a PA-57 solution, 10% PA-57 in PMOH, were added and the composition was stirred for 10 to 30 minutes. This coating composition was applied to etched ADC lenses, ADC plaques and 1.7 R₁ plaques, according to the procedure above, at a withdrawal rate of 2 ipm to provide a cured coating having a thickness of about 2.1 microns, a refractive index of about 1.61, and a Bayer number of 4.6.

**Example 4a (comparative):** 26.7 grams of GPTMS were added dropwise to a solution composed of 51.1 grams of deionized water, 51.1 grams of isopropyl alcohol (IPA), and 4.6 grams of itaconic acid. The aqueous-organic GPTMS mixture was stirred for 1 hour. 12.1 grams ofNalco-1040 colloidal silica were added dropwise and the resulting mixture was stirred for approximately 4 hours. To this mixture, 44.4 grams of Optalake 2130f-2 (A-8), a colloidal metal oxide, were added dropwise and the resulting mixture was stirred overnight to yield a coating composition. 0.14 grams of a surfactant solution, 10% PA-57 in PMOH, were added to the composition and allowed to stir for 10 to 30 minutes. This coating composition was applied to etched ADC lenses, ADC plaques and 1.7 R₁ plaques, according to the procedure above, at a withdrawal rate of 2 ipm to provide a cured coating having a thickness of about 2.3 microns, a refractive index of about 1.61, and a Bayer number of 3.2.

**Example 5**: 55.5 grams of GPTMS were added dropwise to a stirring solution of 94.1 grams of deionized water, 94.1 grams of propylene glycol methyl ether (PMOH), and 8.7 grams of acetic acid (AcOH). After stirring for a period of 4 hours 55.5 grams of bis(triethoxysilyl)ethane (BSE) were added dropwise and resulting mixture was stirred overnight. 92.0 grams of Optolake2130f-2(A-8), a colloidal metal oxide, were added dropwise to the above mixture while stirring. The resulting mixture was stirred for 4 hours to yield a coating composition.

**Example 5A**: 1.6 grams of a solution of FC-430 (3M), 10 weight percent in PMOH, were added to 190 grams of the coating composition, as described in example 5. The coating composition was left to stir for an additional 20 minutes after the addition of the FC-430 to insure mixing. This coating composition was applied to etched ADC lenses, ADC plaques, and 1.7 R₁ glass plaques, according to the procedure above, at a withdrawal rate of 2 ipm to provide a cured coating having a thickness of about 2.2 microns, a refractive index of about 1.59, and a Bayer number of 6.6. Exposure of a coated ADC plaque to boiling tap water tint for a period of 15 minutes yielded a coated article with 89 percent L.T.

**Example 5B**: 1.9 grams of dicyandiamide (DCDA) were added to 188.1 grams of the coating composition, described in example 5 above, followed by dilution with 6.8 grams of a 50 weight percent mixture of PMOH in deionized water. The mixture was left to stir overnight followed by addition of a 1.5 gram solution of FC-430 (3M) 10 weight percent in PMOH. This coating composition was applied to etched ADC lenses, ADC plaques, and 1.7 R₁ glass plaques, according to the procedure above, at a withdrawal rate of 2 ipm to provide a cured coating having a thickness of about 2.3 microns, a refractive index of about 1.58, and a Bayer number of 9.3. Exposure of a coated ADC plaque to boiling tap water tint for a period of 15 minutes yielded a coated article with 84 percent L.T.

**Example 6:** 50.1 grams of GPTMS were added dropwise to a stirring solution of 104.1 grams of deionized water, 104.1 grams of PMOH, and 8.5 grams of itaconic acid (ITA). After stirring for a period of 4 hours 50.1 grams of BSE were added dropwise and resulting mixture was stirred overnight. 83.1 grams of Optolake2130f-2(A-8), a colloidal metal oxide, were added dropwise to the above mixture while stirring. The resulting mixture was stirred for 4 hours to yield a coating composition.

**Example 6A**: 1.6 grams of a solution of FC-430 (3M), 10 weight percent in PMOH, were added to 190 grams of the coating composition, as described in example 6. The coating composition was left to stir for an additional 20 minutes after the addition of the FC-430 to insure mixing. This coating composition was applied to etched ADC lenses, ADC plaques, and 1.7 R₁ glass plaques, according to the procedure above, at a withdrawal rate of 2 ipm to provide a cured coating having a thickness of about 2.3 microns, a refractive index of about 1.58, and a Bayer number of 5.1. Exposure of a coated ADC plaque to boiling tap water tint for a period of 15 minutes yielded a coated article with 78 percent L.T.

**Example 6B:** 1.7 grams of dicyandiamide (DCDA) were added to 188.3 grams of the coating composition, described in example 6 above, followed by dilution with 6.0 grams of a 50 weight percent mixture of PMOH in deionized water. The mixture was left to stir overnight followed by addition of a 1.5 gram solution of FC-430 (3M) 10 weight percent in PMOH. This coating composition was applied to etched ADC lenses, ADC plaques, and 1.7 R₁ glass plaques, according to the procedure above, at a withdrawal rate of 2 ipm to provide a cured coating having a thickness of about 2.1 microns, a refractive index of about 1.60, and a Bayer number of 10.1. Exposure of a coated ADC plaque to boiling tap water tint for a period of 15 minutes yielded a coated article with 87 percent L.T.

**Example 7A:** 74.5 grams of GPTMS were added dropwise to a stirring solution of 158.5 grams of deionized water, 158.5 grams of PMOH, and 12.8 grams of ITA. After stirring for a period of 1 hour, a stirred mixture of 47.8 grams of BSE and 18.8 grams of TEOS were added dropwise and resulting mixture was stirred overnight The resulting mixture was split into 3,117 gram portions. To one portion, 41.3 grams of Optolake2130f-2(A-8), a colloidal metal oxide, were added dropwise, and the resulting mixture was stirred overnight to produce a coating composition. 39.8 grams of a 4.5 weight percent solution of DCDA in PMOH were added to the coating composition and the resulting mixture was stirred overnight followed by addition of 0.15 grams of a 10 weight percent solution of PA-57 in PMOH and further stirring for 20 minutes. This coating composition was applied to etched ADC lenses, ADC plaques, and 1.7 R₁ glass plaques, according to the procedure above, at a withdrawal rate of 2 ipm to provide a cured coating having a thickness of about 2.1 microns, a refractive index of about 1.60, and a Bayer number of 6.0. Exposure of a coated ADC plaque to boiling tap water tint for a period of 30 minutes yielded a coated article with 42 percent L.T.

**Example 7B:** 73.3 grams of GPTMS were added dropwise to a stirring solution of 158.3 grams of deionized water, 158.3 grams of PMOH, and 12.6 grams of ITA. After stirring for a period of 1 hour, a stirred mixture of 58.9 grams of BSE and 11.5 grams of TEOS were added dropwise and resulting mixture was stirred overnight. The resulting mixture was split into 3, 119 gram portions. To one portion, 40.6 grams of Optolake2130f-2(A-8), a colloidal metal oxide, were added dropwise, and the resulting mixture was stirred overnight to produce a coating composition. 37.8 grams of a 4.5 weight percent solution of DCDA in PMOH were added to the coating composition and the resulting mixture was stirred overnight followed by addition of 0.15 grams of a 10 weight percent solution of PA-57 in PMOH and further stirring for 20 minutes. This coating composition was applied to etched ADC lenses, ADC plaques, and 1.7 R₁ glass plaques, according to the procedure above, at a withdrawal rate of 2 ipm to provide a cured coating having a thickness of about 1.9 microns, a refractive index of about 1.60, and a Bayer number of 5.8. Exposure of a coated ADC plaque to boiling tap water tint for a period of 30 minutes yielded a coated article with 85 percent L.T.

**Example 8**: 48.3 grams of GPTMS were added dropwise to a stirring solution of 109.0 grams of deionized water, 109.0 grams of IPA, and 8.3 grams of ITA. After stirring for a period of 2 hours, a stirred mixture of 31.0 grams of BSE and 2.4 grams of TEOS were added dropwise and resulting mixture was stirred overnight.

**Example 8A:** To 154 grams of the mixture in example 8 were added 4.1 grams of Nalco 1042 colloidal silica, followed by stirring for 4 hours. To this mixture 40.2 grams of Optolake2130f-2(A-8), a colloidal metal oxide, were added dropwise, and the resulting mixture was stirred overnight to produce a coating composition. 0.15 grams of a 10 weight percent solution of PA-57 in PMOH were added to the above mixture, followed by further stirring for 20 minutes. This coating composition was applied to etched ADC lenses, ADC plaques, and 1.7 R₁ glass plaques, according to the procedure above, at a withdrawal rate of 2 ipm to provide a cured coating having a thickness of about 2.0 microns, a refractive index of about 1.60, and a Bayer number of 4.2. Exposure of a coated ADC plaque to boiling tap water tint for a period of 30 minutes yielded a coated article with 81 percent L.T.

**Example 8B**: To example 8A above were added 3.4 grams of solid DCDA and the mixture was stirred overnight to produce a coating composition. 0.15 grams of a 10 weight percent solution of PA-57 in PMOH were added to the above composition, followed by further stirring for 20 minutes. This coating composition was applied to etched ADC lenses, ADC plaques, and 1.7 R₁ glass plaques, according to the procedure above, at a withdrawal rate of 2 ipm to provide a cured coating having a thickness of about 2.1 microns, a refractive index of about 1.60, and a Bayer number of 5.3. Exposure of a coated ADC plaque to boiling tap water tint for a period of 30 minutes yielded a coated article with 68 percent L.T.

**Example 9**: 48.5 grams of GPTMS were added dropwise to a stirring solution of 109.3 grams of deionized water, 109.3 grams of IPA, and 8.3 grams of ITA. After stirring for a period of 2 hours, a stirred mixture of 31.1 grams of BSE and 2.4 grams of TEOS were added dropwise and resulting mixture was stirred overnight.

**Example 9A:** To 154 grams of the mixture in example 9 were added 3.5 grams of Nalco 1040 colloidal silica, followed by stirring for 4 hours. To this mixture 40.2 grams of Optolake2130f-2(A-8), a colloidal metal oxide, were added dropwise, and the resulting mixture was stirred overnight to produce a coating composition. 0.15 grams of a 10 weight percent solution of PA-57 in PMOH were added to the above mixture, followed by further stirring for 20 minutes. This coating composition was applied to etched ADC lenses, ADC plaques, and 1.7 R₁ glass plaques, according to the procedure above, at a withdrawal rate of 2 ipm to provide a cured coating having a thickness of about 1.9 microns, a refractive index of about 1.60, and a Bayer number of 4.3. Exposure of a coated ADC plaque to boiling tap water tint for a period of 30 minutes yielded a coated article with 63 percent L.T.

**Example 9B:** To example 9A above were added 3.5 grams of solid DCDA and the mixture was stirred overnight to produce a coating composition. 0.15 grams of a 10 weight percent solution of PA-57 in PMOH were added to the above composition, followed by further stirring for 20 minutes. This coating composition was applied to etched ADC lenses, ADC plaques, and 1.7 R₁ glass plaques, according to the procedure above, at a withdrawal rate of 2 ipm to provide a cured coating having a thickness of about 2.0 microns, a refractive index of about 1.60, and a Bayer number of 5.9. Exposure of a coated ADC plaque to boiling tap water tint for a period of 30 minutes yielded a coated article with 76 percent L.T.

**Example 10 (comparative):** 63.0 grams of 3-glycidoxypropyltrimethoxy silane (GPTMS) were added dropwise to a solution composed of 92.8 grams of deionized water, 92.8 grams of propylene glycol methyl ether (PMOH), and 10.0 grams of acetic acid (AcOH). The aqueous-organic GPTMS mixture was stirred for 1 hour. To the mixture, 19.8 grams of TEOS were added dropwise and allowed to stir overnight. 16.8 grams ofNalco-1042 colloidal silica were added dropwise and the resulting mixture was stirred for approximately 4 hours. 104.7 grams of Optalake 2130f-2 (A-8), a colloidal metal oxide, were added dropwise and the resulting mixture was stirred overnight to yield a coating composition.

1.4 grams of a flow modifier comprising a PMOH-based solution containing 10 weight percent FC-430 (3M), were added to 190 grams of a coating composition prepared in accordance with the process described above. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.9 microns, a refractive index of about 1.60, and a Bayer number of 8.9. After exposure to boiling tap water tint for 15 minutes, the coated lenses or plaques did not exhibit any crazing.

**Example 11 (comparative)** : 63.0 grams of GPTMS were added dropwise to a solution composed of 95.5 grams of deionized water, 95.5 grams of PMOH, and 10.0 grams of AcOH. The aqueous-organic GPTMS mixture was stirred for 1 hour. To the mixture, 19.8 grams of TEOS were added dropwise and allowed to stir overnight. 11.4 grams of Nalco-1050 colloidal silica were added dropwise and the resulting mixture was stirred for approximately 4 hours. 104.7 grams of Optalake 2130f-2 (A-8), a colloidal metal oxide, were added dropwise and the resulting mixture was stirred overnight to yield a coating composition.

1.4 grams of a flow modifier comprising a PMOH-based solution containing 10 weight percent FC-430 (3M), were added to 190 grams of a coating composition prepared in accordance with the process described above. The coating composition was left to stir for an additional 10 to 30 minutes to insure mixing. This coating composition was applied to etched ADC lenses, ADC plaques and 1.7 R₁ plaques, according to procedure A, at a withdrawal rate of 2 ipm to provide a cured coating having a thickness of about 2.0 microns, a refractive index of about 1.60, and a Bayer number of 6.3. After exposure to boiling tap water tint for 15 minutes, the coated lenses or plaques did not exhibit any crazing.

**Comparative Ex. A**: 63.0 grams of GPTMS were added dropwise to a solution composed of 91.3 grams of deionized water, 91.3 grams of PMOH, and 10.0 grams of AcOH. The aqueous-organic GPTMS mixture was stirred for 1 hour. To the mixture, 39.7 grams of TEOS were added dropwise and allowed to stir for 5 hours. 104.7 grams of Optalake 2130f-2 (A-8), a colloidal metal oxide, were added dropwise and the resulting mixture was stirred overnight to yield a coating composition.

1.4 grams of a flow modifier comprising a PMOH-based solution containing 10 weight percent FC-430 (3M), were added to 190 grams of a coating composition prepared in accordance with the process described in Example 11. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.9 microns, a refractive index of about 1.60, and a Bayer number of 10.0. After exposure to boiling tap water tint for 15 minutes, the coated lenses or plaques exhibited crazing.

**Example 12a (comparative):** 26.7 grams of GPTMS were added dropwise to a stirring 49.5 grams of deionized water. The aqueous-organic GPTMS mixture was stirred for 1 hour. A solution of 4.6 grams of itaconic acid dissolved in 49.5 grams of PMOH were added quickly to the aqueous GPTMS mixture followed by 30 minutes of stirring. 8.4 grams of TEOS were added to the mixture and stirred overnight. To the resultant mixture, 7.1 grams of Nalco-1034A colloidal silica were added dropwise and allowed to stir for approximately 4 hours. 44.2 grams of Optalake 2130f-2 (A-8), a colloidal metal oxide, were added dropwise and the resulting mixture was stirred overnight to yield a coating composition. 0.14 grams of a surfactant solution, 10% PA-57 in PMOH, were added to the coating composition. To insure complete mixing, the coating mixture was stirred for an additional 10 to 30 minutes. This coating composition was applied to etched ADC lenses, ADC plaques and 1.7 R₁ plaques, according to the procedure above, at a withdrawal rate of 2 ipm to provide a cured coating having a thickness of about 2.2 microns, a refractive index of about 1.60, and a Bayer number of 5.5.

**Example 12b (comparative):** 53.7 grams of GPTMS were added dropwise to a solution composed of 106.5 grams of deionized water, 29.4 grams of PMOH, and 9.2 grams of itaconic acid. The aqueous-organic GPTMS mixture was stirred for 1 hour. To the mixture, 16.9 grams of TEOS were added and stirred overnight. 14.3 grams of Nalco-1042 colloidal silica were added dropwise and the resulting mixture was stirred for approximately 4 hours. To this mixture, 89.1 grams of Optalake 2130f-2 (A-8), a colloidal metal oxide, were added dropwise and the resulting mixture was stirred overnight to yield a coating composition. A solution consisting of 3.8 grams of DCDA dissolved in 77.1 grams of PMOH were added to the above coating composition. After stirring for almost one complete day, 23 hours, 0.3 grams of a PA-57 solution, 10% PA-57 in PMOH, were added to the composition and allowed to stir for 10 to 30 minutes. This coating composition was applied to etched ADC lenses, ADC plaques and 1.7 R₁plaques, according to the procedure above, at a withdrawal rate of 2 ipm to provide a cured coating having a thickness of about 2.0 microns, a refractive index of about 1.60, and a Bayer number of 5.7. After exposure to boiling tap water tint for 15 minutes, the coated lenses or plaques did not exhibit any crazing.

**Comparative Ex. B**: 26.6 grams of GPTMS were added dropwise to a stirring 40.2 grams of deionized water. The aqueous-organic GPTMS mixture was stirred for 1 hour. A solution of 4.6 grams ofitaconic acid dissolved in 40.2 grams ofPMOH were added quickly to the aqueous GPTMS mixture followed by 30 minutes of stirring. 16.8 grams of TEOS were added dropwise and the resulting mixture was stirred overnight. To this mixture, 44.3 grams of Optalake 2130f-2 (A-8), a colloidal metal oxide, were added dropwise and the resulting mixture was stirred for an additional 4 hours to yield a coating composition.

**Comparative Ex. B1:** 0.14 grams of a flow modifier comprising a PMOH-based solution containing 10 weight percent PA-57, were added to 190 grams of the coating composition, as described in comparative example B. The coating composition was left to stir for an additional 10 to 30 minutes to insure mixing. This coating composition was applied to etched ADC lenses, ADC plaques and 1.7 R_{I} plaques, according to the procedure above, at a withdrawal rate of 2 ipm to provide a cured coating having a thickness of about 1.9 microns, a refractive index of about 1.60, and a Bayer number of 6.5. After exposure to boiling tap water tint for 10 minutes, the coated lenses or plaques exhibited crazing.

**Comparative Ex. B2:** 1.9 grams of DCDA were added to 190.0 grams of the coating composition, as described in comparative example B. The mixture was left to stir for approximately 4 hours followed by the addition of a 0.14-gram solution of PA-57, 10 weight percent in PMOH. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.9 microns, a refractive index of about 1.60, and a Bayer number of 7.1. After exposure to boiling tap water tint for 15 minutes, the coated lenses or plaques did not exhibit any crazing.

**Example 13 (comparative)** : 56.3 grams of GPTMS were added dropwise to a stirring solution composed of 9.5 grams of 0.05N aqueous HCl solution. The aqueous-organic GPTMS mixture stirred for approximately 30 minutes. A solution of 9.6 grams of ITA dissolved in 203.1 grams of PMOH were added quickly to the mixture and stirred for an additional 30 minutes. To the mixture, 17.7 grams of TEOS were added to the mixture and stirred for approximately 5 hours. 10.2 grams of Nalco-1050 colloidal silica were added dropwise and the resulting mixture was stirred overnight. To this mixture, 93.6 grams of Optalake 2130f-2 (A-8), a colloidal metal oxide, were added dropwise and the resulting mixture was stirred for an additional 4 hours to yield a coating composition.

**Example 13A (comparative):** 1.4 grams of a flow modifier comprising a PMOH-based solution containing 10 weight percent FC-430 (3M), were added to 190 grams of a coating composition prepared in accordance with the process described in example 13. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.7 microns, a refractive index of about 1.61, and a Bayer number of 2.3. After exposure to boiling tap water tint for 15 minutes, the coated lenses or plaques did not exhibit any crazing.

**Example 13B (comparative):** 1.9 grams of DCDA were added to 188.1 grams of the coating composition, as described in Example 13, followed by a dilution with 7.3 grams of a 50 weight percent solution of PMOH in deionized water. The mixture was left to stir overnight followed by the addition of a 1.4 gram solution of FC-430 (3M), 10 weight percent in PMOH. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.5 microns, a refractive index of about 1.61, and a Bayer number of 6.2. After exposure to boiling tap water tint for 15 minutes, the coated lenses or plaques did not exhibit any crazing.

**Example 14 (comparative)** : 56.1 grams of GPTMS were added dropwise to a stirring solution of 9.5 grams of a 0.05N aqueous HCl solution. The aqueous-organic GPTMS mixture stirred for approximately 30 minutes. A solution of 9.6 grams of ITA dissolved in 198.9 grams of PMOH were added quickly to the mixture and stirred for an additional 30 minutes. To the mixture, 17.7 grams of TEOS were added to the mixture and stirred for approximately 4 hours. 15.0 grams of Nalco-1042 colloidal silica were added dropwise and the resulting mixture was stirred overnight. To this mixture, 93.3 grams of Optalake 2130f-2 (A-8), a colloidal metal oxide, were added dropwise and the resulting mixture was stirred for an additional 4 hours to yield a coating composition. After exposure to boiling tap water tint for 15 minutes, the coated lenses or plaques did not exhibit any crazing.

**Example 14A (comparative):** 1.4 grams of a flow modifier comprising a PMOH-based solution containing 10 weight percent FC-430 (3M), were added to 190 grams of a coating composition prepared in accordance with the process described in example 14. The coating composition was left to stir for an additional 10 to 30 minutes to insure mixing. This coating composition was applied to etched ADC lenses, ADC plaques and 1.7 R,plaques, according to the procedure above, at a withdrawal rate of 2 ipm to provide a cured coating having a thickness of about 1.3 microns, a refractive index of about 1.61, and a Bayer number of 5.0. After exposure to boiling tap water tint for 15 minutes, the coated lenses or plaques did not exhibit any crazing.

**Example 14B (comparative):** 1.7 grams of DCDA were added to 188.3 grams of the coating composition, as described in example 14, followed by a dilution with 6.0 grams of a 50 weight percent solution of PMOH in deionized water. The mixture was left to stir overnight followed by the addition of a 1.4 gram solution of FC-430 (3M), 10 weight percent in PMOH. The coating composition was left to stir for an additional 10 to 30 minutes to insure mixing. This coating composition was applied to etched ADC lenses, ADC plaques and 1.7 R_{I} plaques, according to the procedure above, at a withdrawal rate of 2 ipm to provide a cured coating having a thickness of about 1.6 microns, a refractive index of about 1.61, and a Bayer number of 5.8. After exposure to boiling tap water tint for 15 minutes, the coated lenses or plaques did not exhibit any crazing.

**Comparative Ex. C:** 63.7 grams of GPTMS were added dropwise to a solution composed of 27.5 grams of 0.01N aqueous HCl, 46.9 grams of methanol, 101.9 grams of methylethyl ketone, and 12.2 grams of ITA. The aqueous-organic GPTMS mixture was stirred for 1 hour. 56.0 grams of TEOS were added dropwise and the resulting mixture was stirred overnight. To this mixture, 91.8 grams of Optalake 1130F-2(A-8), a colloidal metal oxide, were added dropwise and the resulting mixture was stirred for an additional 7 hours to yield a coating composition.

**Comparative Ex. C1:** 0.95 grams of L-77 were added to 190 grams of the coating composition, as described in comparative example C. The coating composition was left to stir for an additional 10 to 30 minutes to insure mixing. This coating composition was applied to etched ADC lenses; ADC plaques and 1.7 R_{I} plaques, according to the procedure above, at a withdrawal rate of 2 ipm to provide a cured coating having a thickness of about 1.3 microns, a refractive index of about 1.61, and a Bayer number of 4.0. After exposure to boiling tap water tint for 10 minutes, the coated lenses or plaques exhibited crazing.

**Comparative Ex. C2:** 2.4 grams of DCDA were added to 187.6 grams of the coating composition, as described in comparative example C. The mixture was left to stir overnight followed by the addition of 0.96 grams ofL-77. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.4 microns, a refractive index of about 1.60, and a Bayer number of 7.6. After exposure to boiling tap water tint for 10 minutes, the coated lenses or plaques exhibited crazing.

**Comparative Ex. D**: A stirred mixture of 63.6 grams of GPTMS and 56.0 grams of TEOS were added dropwise to 27.5 grams of a 0.01 N HCI solution. Stirring proceeded for approximately 1 hour followed by the addition of a solvent mixture of 46.9 grams of methanol and 101.9 grams of methylethyl ketone. After the mixture was stirred for 1 hour, the resulting composition was aged in the cold room, 4 C, for approximately 24 hours. To this mixture, 91.8 grams of Optalake 1130F-2(A-8), a colloidal metal oxide, were added dropwise and the resulting mixture was stirred overnight. 12.2 grams of ITA were added to the mixture and stirred for an additional hour to yield a coating composition.

**Comparative Ex. D1:** 0.95 grams of L-77 were added to 190 grams of the coating composition, as described in comparative example D. The coating composition was left to stir for an additional 10 to 30 minutes to insure mixing. This coating composition was applied to etched ADC lenses, ADC plaques and 1.7 R₁ plaques, according to the procedure above, at a withdrawal rate of 2 ipm to provide a cured coating having a thickness of about 1.2 microns, a refractive index of about 1.61, and a Bayer number of 4.6. After exposure to boiling tap water tint for 10 minutes, the coated lenses or plaques exhibited crazing.

**Comparative Ex. D2**: 2.4 grams of DCDA were added to 187.6 grams of the coating composition, as described in comparative example D. The mixture was left to stir for 1 hour followed by the addition of 0.96 grams of L-77. The coating composition was left to stir for an additional 10 to 30 minutes to insure mixing. This coating composition was applied to etched ADC lenses, ADC plaques and 1.7 R_{I} plaques, according to the procedure above, at a withdrawal rate of 2 ipm to provide a cured coating having a thickness of about 1.5 microns, a refractive index of about 1.60, and a Bayer number of 6.0. After exposure to boiling tap water tint for 10 minutes, the coated lenses or plaques exhibited light crazing.

Thus, it should be apparent that there has been provided in accordance with the present invention a coating composition and several preferred formulation thereof as as methods for making and using same that fully satisfy the objectives and advantages set forth above. Although the invention has been described in conjunction with specific embodiments thereof, it is evident that many alternatives, modifications and variations will be apparent to those skilled in the art.

## Claims

1. A coating composition which, when applied to a substrate and cured, provides an abrasion resistant coating having a refractive index, to that of the substrate, comprising:
an aqueous-organic solvent mixture containing hydrolysis products and partial condensates of an epoxy functional silane, a metal oxide composite colloid, a disilane and a carboxylic acid functional compound wherein the carboxylic acid functional compound is selected from the group consisting of monofunctional carboxylic acids, multifunctional carboxylic acids, anhydrides and combinations thereof, and further wherein the epoxy functional silane is present in a molar ratio to the disilane component and the metal oxide composite colloid component of from about 0.1:1 to 4:1.

2. The coating composition as claimed in Claim 1, wherein the disilane is represented by the formula (R⁷O)ₓR⁸₃₋ₓSi-R⁹_{y}-SiR¹⁰₃₋ₓ(OR¹¹)ₓ; where x is 0, 1, 2 or 3 and y is 0 or 1; R⁸ and R¹⁰ are H or an alkyl group containing from about 1 to 10 carbon atoms, a functionalized alkyl group, an alkylene group, an aryl group, an alkyl polyether group and combinations thereof, R⁷ and R¹¹ are H, an alkyl group containing from about 1 to 10 carbon atoms, an acetyl group, and combinations thereof; wherein if y is 1 then R⁹ can be an alkylene group containing from about 1 to 12 carbon atoms, an alkylene polyether containing from about 1 to 12 carbon atoms, an aryl group, an alkylene substituted aryl group, an alkylene group which may contain one or more olefins, or an oxygen or sulfur atom; and further wherein if x = 0 then R⁸ and R¹⁰ are a chlorine or bromine atom.

3. The coating composition of any one of claims 1-2, wherein the hydrolysis products and partial condensates of the epoxy functional silane are present in the aqueous-organic solvent mixture in an amount from about 10 to about 90 weight percent based on the total solids of the coating composition.

4. (Amended) The coating composition of any one of claims 1-2, wherein the carboxylic acid functional compound is present in the aqueous-organic solvent mixture in an amount of from about 1.0 to 90 weight percent, based on the total weight of the coating composition.

5. The coating composition of any one of claims 1-2, further comprising a colloidal silica component present in the aqueous-organic solvent mixture in an amount of from about 0.1 to 75 weight percent, based on the total solids of the coating composition.

6. The coating composition of any one of claims 1-2, wherein the metal oxide composite colloid is present in the aqueous-organic solvent mixture in an amount of from about 1 to 90 weight percent, based on the total solids of the coating composition.

7. The coating composition of any one of claims 1-2, wherein the aqueous-organic solvent mixture further comprises from about 0.1 to about 50 weight percent, based on the total solids of the composition, of a mixture of hydrolysis products and partial condensates of a silane additive represented by the formula R⁷ₓSi(OR⁸)₄₋ₓ where x is an integer of 1, 2 or 3, R⁷ is H, an alkyl group containing from 1 to about 10 carbon atoms, a functionalized alkyl group, an alkylene group, an aryl group, an alkyl ether group and combinations thereof, R⁸ is H, an alkyl group containing from 1 to about 10 carbon atoms, an acetyl group and combinations thereof.

8. The coating composition of any one of claims 1-2, wherein the amount of water present in the aqueous-organic solvent mixture is an amount sufficient to provide a substantially homogeneous mixture of hydrolysis products and partial condensates of the alkoxy functional silanes.

9. The coating composition of claim 8, further comprising an effective amount of a condensation catalyst.

10. The coating composition of any one of claims 1-2, wherein the disilane is present in the aqueous-organic solvent mixture in an amount of from about 1 to 75 weight percent, based on the total solids of the composition.

11. The coating composition of any one of claims 1-2 further comprising from about 0.1 to 75 weight percent, based on the total solids of the composition, of a colloidal silica component.

12. The coating composition of any one of claims 1-11, wherein the solvent constituent of the aqueous-organic solvent mixture is selected from the group consisting of an alcohol, an ether, a glycol ether, an ester, a ketone, a glycol ether acetate and combinations thereof.

13. The coating composition of any one of claims 1-11, wherein the solvent constituent of the aqueous-organic solvent mixture is an alcohol having the general formula ROH, where R is an alkyl group containing from about 1 to about 10 carbon atoms.

14. The coating composition of any one of claims 1-11, wherein the solvent constituent of the aqueous-organic solvent mixture is selected from the group consisting of a glycol, an ether, a glycol ether and mixtures thereof having the formula R¹-(OR²)ₓ-OR¹ where x is an integer of 0, 1, 2, 3, or 4, R¹ is H or an alkyl group containing from about 1 to about 10 carbon atoms, and R² is an alkylene group containing from about 1 to about 10 carbon atoms and combinations thereof.

15. The coating composition of any one of claims 1-14, wherein the epoxy functional silane is represented by the formula R³ₓSi(OR⁴)₄₋ₓ where x is an integer of 1, 2 or 3, R³ is H, an alkyl group, a functionalized alkyl group, an alkylene group, an aryl group, an alkyl ether, and combinations thereof containing from 1 to about 10 carbon atoms and having at least 1 epoxy functional group, and R⁴ is H, an alkyl group containing from 1 to about 5 carbon atoms, an acetyl group, a Si(OR⁵)_{3-Y} R⁶_{Y} group where y is an integer of 0, 1, 2, or 3, and combinations thereof, R⁵ is H, an alkyl group containing from 1 to about 5 carbon atoms, an acetyl group, another -Si(OR⁵)_{3-y}R⁶_{y} group, and combinations thereof, and R⁶ is H, an alkyl group, a functionalized alkyl group, an alkylene group, an aryl group, an alkyl ether and combinations thereof containing from 1 to about 10 carbon atoms.

16. The coating composition of any one of claims 1-2, wherein the carboxylic acid functional compound is represented by the formula R⁷(COOR⁸)x, where x is an integer of 1, 2, 3, or 4, and where R⁷ is H, an alkyl group, a functionalized alkyl group, an alkylene group, an aryl group, a functionalized aryl group, an alkyl ether, and combinations thereof containing from 1 to about 10 carbon atoms, and where R⁸ is H, a formyl group, a carbonyl group, or an acyl group, where the acyl group can be functionalized with an alkyl group, a functionalized alkyl group, an alkylene group, an aryl group, a functionalized aryl group, an alkyl ether, and combinations thereof containing from 1 to about 10 carbon atoms, and where R⁷ and R⁸ may or may not be joined by a chemical bond.

17. The coating composition of any one of claims 1-16, wherein the metal oxide composite colloid may contain any combination of alumina, silica, titania, zirconia, tin oxide, antimony oxide, iron oxide, lead oxide, and/or bismuth oxide, and further wherein at least one component of the metal oxide composite colloid is neither alumina nor silica.

18. The coating composition of any one of claims 1-17, wherein the amount of water present in the aqueous-organic solvent mixture is an amount sufficient to provide a substantially homogeneous mixture of hydrolysis products and partial condensates of all reactive components.

19. The coating composition of claim 18 further comprising an effective amount of co-hydrolysis catalyst thereby enhancing the hydrolysis rates of the hydrolyzable components.

20. The coating composition of any one of claims 1-19, further comprising an effective amount of a catalyst to thereby provide enhanced abrasion resistance to the cured coating.

21. The coating composition of claim 20, wherein the effective amount of the catalyst is from about 0.05 to about 20 weight percent, based on the total solids of the coating composition.

22. The coating composition of any one of claims 1-21 further comprising an effective amount of a leveling agent thereby spreading the aqueous-organic solvent mixture on the substrate to provide substantially uniform contact of the aqueous-organic solvent mixture with the substrate.

23. An article comprising:
a substrate; and
a substantially transparent abrasion-resistant coating formed on at least one surface of the substrate, the coating having a refractive index substantially corresponding to a refractive index of the substrate and being formed by curing a coating composition, wherein the coating composition is claimed in any one of claims 1-22.

24. A process for providing an abrasion resistant coating on the substrate wherein the abrasion resistant coating has a controlled tintability and a refractive index substantially corresponding to the refractive index of the substrate, the process comprising:
applying to at least one surface of a substrate an effective amount of a coating composition to provide a substantially uniform coating of the coating composition on the substrate, wherein the coating composition is claimed in any one of claims 1-22; and
curing the coating composition to provide the substrate with a cured coating having controlled tintability and a refractive index substantially corresponding to the refractive index of the substrate.

## Patentansprüche

1. Beschichtungszusammensetzung, die, wenn sie auf ein Substrat aufgetragen und gehärtet ist, eine abriebfeste Beschichtung mit einer Brechzahl gewährt, die derjenigen des Substrats entspricht, wobei die Zusammensetzung aufweist:
eine wässrig-organische Lösemittelmischung, die Hydrolyseprodukte und partielle Kondensate eines Epoxy-funktionellen Silans enthält, ein Metalloxid-Mischkolloid, ein Disilan und eine Carbonsäure-funktionelle Verbindung, wobei die Carbonsäure-funktionelle Verbindung ausgewählt ist aus der Gruppe, bestehend aus monofunktionellen Carbonsäuren, multifunktionellen Carbonsäuren, Anhydriden und Kombinationen davon und worin ferner das Epoxy-funktionelle Silan zu der Disilan-Komponente und der Komponente des Metalloxid-Mischkolloids in einem Molverhältnis von etwa 0,1:1 bis 4:1 vorliegt.

2. Beschichtungszusammensetzung nach Anspruch 1, wobei das Disilan dargestellt wird durch die Formel
(R⁷O)ₓR⁸₃₋ₓSi-R⁹_{y}-SiR¹⁰₃₋ₓ(OR¹¹)ₓ;
worin x 0, 1, 2 oder 3 beträgt und y 0 oder 1 beträgt; R⁸ und R¹⁰ sind H oder eine Alkyl-Gruppe, die etwa 1 bis 10 Kohlenstoffatome enthält, eine funktionalisierte Alkyl-Gruppe, eine Alkylen-Gruppe, eine Aryl-Gruppe, eine Alkylpolyether-Gruppe sowie Kombinationen davon; R⁷ und R¹¹ sind H, eine Alkyl-Gruppe, die etwa 1 bis 10 Kohlenstoffatome enthält, eine Acetyl-Gruppe sowie Kombinationen davon;
wobei, wenn y 1 beträgt, dann R⁹ eine Alkylen-Gruppe sein kann, die etwa 1 bis 12 Kohlenstoffatome enthält, ein Alkylenpolyether, der etwa 1 bis 12 Kohlenstoffatome enthält, eine Aryl-Gruppe, eine Alkylen-substituierte Aryl-Gruppe, eine Alkylen-Gruppe, die ein oder mehrere Olefine enthalten kann, oder ein Sauerstoff- oder Schwefelatom; und worin ferner, wenn x = 0 beträgt, dann R⁸ und R¹⁰ ein Chlor- oder Bromatom sind.

3. Beschichtungszusammensetzung nach einem der Ansprüche 1 bis 2, worin die Hydrolyseprodukte und partiellen Kondensate des Epoxy-funktionellen Silans in der wässrig-organischen Lösemittelmischung bezogen auf die Gesamtfeststoffe der Beschichtungszusammensetzung in einer Menge von etwa 10% bis etwa 90 Gew.% vorliegen.

4. Beschichtungszusammensetzung nach einem der Ansprüche 1 bis 2, worin die Carbonsäure-funlctionelle Gruppe in der wässrig-organischen Lösemittelmischung bezogen auf das Gesamtgewicht der Beschichtungszusammensetzung in einer Menge von etwa 1,0% bis 90 Gew.% vorliegt.

5. Beschichtungszusammensetzung nach einem der Ansprüche 1 bis 2, ferner aufweisend eine kolloidale Siliciumdioxid-Komponente, die in der wässrig-organischen Lösemittelmischung bezogen auf die Gesamtfeststoffe der Beschichtungszusammensetzung in einer Menge von etwa 0,1% bis 75 Gew.% vorliegt.

6. Beschichtungszusammensetzung nach einem der Ansprüche 1 bis 2, worin das Metalloxid-Mischkolloid in der wässrig-organischen Lösemittelmischung bezogen auf die Gesamtfeststoffe der Beschichtungszusammensetzung in einer Menge von etwa 1% bis 90 Gew.% vorliegt.

7. Beschichtungszusammensetzung nach einem der Ansprüche 1 bis 2, worin die wässrig-organische Lösemittelmischung ferner etwa 0,1% bis etwa 50 Gew,% bezogen auf die Gesamtfeststoffe der Zusammensetzung einer Mischung von Flydrolyseprodukten und partiellen Kondensaten eines Silan-Additivs aufweist, dargestellt durch die Formel R⁷ₓSi(OR⁸)₄₋ₓ, worin x eine ganze Zahl von 1, 2 oder 3 ist, R⁷ ist H, eine Alkyl-Gruppe, die 1 bis etwa 10 Kohlenstoffatome enthält, eine funktionalisierte Alkyl-Gruppe, eine Alkylen-Gruppe, eine Aryl-Gruppe, eine Alkylether-Gruppe sowie Kombinationen davon; R⁸ ist H, eine Alkyl-Gruppe, die 1 bis etwa 10 Kohlenstoffatome enthält, eine Acetyl-Gruppe sowie Kombinationen davon.

8. Beschichtungszusammensetzung nach einem der Ansprüche 1 bis 2, worin die Menge an Wasser, die in der wässrig-organischen Lösemittelmischung vorliegt, eine ausreichende Menge ist, um eine weitgehend homogene Mischung von Hydrolyseprodukten und partiellen Kondensaten der Alkoxy-funktionellen Silane bereitzustellen.

9. Beschichtungszusammensetzung nach Anspruch 8, ferner aufweisend eine wirksame Menge eines Kondensationskatalysators.

10. Beschichtungszusammensetzung nach einem der Ansprüche 1 bis 2, worin das Disilan in der wässrig-organischen Lösemittelmischung bezogen auf die Gesamtfeststoffe der Zusammensetzung in einer Menge von etwa 1% bis 75 Gew.% vorliegt.

11. Beschichtungszusammensetzung nach einem der Ansprüche 1 bis 2, ferner aufwiesend etwa 0,1% bis 75 Gew.% einer kolloidalen Siliciumdioxid-Komponente, bezogen auf die Gesamtfeststoffe der Zusammensetzung.

12. Beschichtungszusammensetzung nach einem der Ansprüche 1 bis 11, worin der Lösemittelbestandteil der wässrig-organischen Lösemittelmischung ausgewählt ist aus der Gruppe, bestehend aus einem Alkohol, einem Ether, einem Glykolether, einem Ester, einem Keton, einem Glykoletheracetat sowie Kombinationen davon.

13. Beschichtungszusammensetzung nach einem der Ansprüche 1 bis 11, worin der Lösemittelbestandteil der wässrig-organischen Lösemittelmischung ein Alkohol ist, der die allgemeine Formel ROH hat, worin R eine Alkyl-Gruppe ist, die von etwa 1 bis etwa 10 Kohlenstoffatome enthält.

14. Beschichtungszusammensetzung nach einem der Ansprüche 1 bis 11, worin der Lösemittelbestandteil der wässrig-organischen Lösemittelmischung ausgewählt ist aus der Gruppe, bestehend aus einem Glykol, einem Ether, einem Glykolether sowie Mischungen davon mit der Formel R¹-(OR²)ₓ-OR¹, worin x eine ganze Zahl von 0, 1, 2, 3 oder 4 ist, R¹ ist H oder eine Alkyl-Gruppe, die etwa 1 bis etwa 10 Kohlenstoffatome enthält, und R² ist eine Alkylen-Gruppe, die etwa 1 bis etwa 10 Kohlenstoffatome enthält, sowie Kombinationen davon.

15. Beschichtungszusammensetzung nach einem der Ansprüche 1 bis 14, worin das Epoxy-funktionelle Silan dargestellt wird durch die Formel R³ₓSi(OR⁴)₄₋ₓ, worin x eine ganze Zahl von 1, 2 oder 3 ist, R³ ist H, eine Alkyl-Gruppe, eine funktionalisierte Alkyl-Gruppe, eine Alkylen-Gruppe, eine Aryl-Gruppe, ein Alkylether sowie Kombinationen davon, die 1 bis etwa 10 Kohlenstoffatome enthalten und mindestens eine Epoxy-funktionelle Gruppe haben, und R⁴ ist H, eine Alkyl-Gruppe, die 1 bis etwa 5 Kohlenstoffatome enthält, eine Acetyl-Gruppe, eine Si(OR⁵)_{3-y}R⁶_{y}-Gruppe, worin y eine ganze Zahl von 0, 1, 2 oder 3 ist, sowie Kombinationen davon; R⁵ ist H, eine Alkyl-Gruppe, die 1 bis etwa 5 Kohlenstoffatome enthält, eine Acetyl-Gruppe, eine andere -Si(OR⁵_{3-y}R⁶_{y}-Gruppe sowie Kombinationen davon, und R⁶ ist H, eine Alkyl-Gruppe, eine funktionalisierte Alkyl-Gruppe, eine Alkylen-Gruppe, eine Aryl-Gruppe, ein Alkylether sowie Kombinationen davon, die 1 bis etwa 10 Kohlenstoffatome enthalten.

16. Beschichtungszusammensetzung nach einem der Ansprüche 1 bis 2, worin die Carbonsäure-funktionelle Verbindung dargestellt wird durch die Formel R⁷(COOR⁸)ₓ, worin x eine ganze Zahl von 1, 2, 3 oder 4 ist, und worin R⁷ H ist, eine Alkyl-Gruppe, eine funktionalisierte Alkyl-Gruppe, eine Alkylen-Gruppe, eine Aryl-Gruppe, eine funktionalisierte Aryl-Gruppe, ein Alkylether sowie Kombinationen davon, die 1 bis etwa 10 Kohlenstoffatome enthalten: und worin R⁸ H ist, eine Formyl-Gruppe, eine CarbonylGruppe oder eine Acyl-Gruppe, wobei die Acyl-Gruppe mit einer Alkyl-Gruppe funktionalisiert sein kann, eine funktionalisierte Alleyl-Gruppe, eine Alkylen-Gruppe, eine Aryl-Crruppe, eine funktionalisierte Aryl-Gruppe, ein Alkylether sowie Kombinationen davon, die 1 bis etwa 10 Kohlenstoffatome enthalten, und worin R⁷ und R⁸ über eine chemische Bindung verknüpft sein können oder nicht verknüpft sind.

17. Beschichtungszusammensetzung nach einer der Ansprüche 1 bis 16, worin das Metalloxid-Mischkolloid enthalten kann: eine beliebige Kombination von Aluminiumoxid, Siliciumdioxid, Titandioxid, Zirconiumdioxid, Zinnoxid, Antimonoxid, Eisenoxid, Bleioxid und/oder Bismutoxid, sowie ferner mindestens eine Komponente des Metalloxid-Mischkolloids weder Aluminiumoxid noch Siliciumdioxid ist.

18. Beschichtungszusammensetzung nach einem der Ansprüche 1 bis 17, worin die Menge an Wasser, die in der wässrig-organischen Lösemittelmischung vorliegt, eine ausreichende Menge ist, um eine weitgehend homogene Mischung von Hydrolyseprodukten und partiellen Kondensaten aller reaktionsfähigen Komponenten bereitstellt.

19. Beschichtungszusammensetzung nach Anspruch 18, ferner aufweisend eine wirksame Menge an Hydrolyse-Cokatalysator, wodurch die Hydrolysegeschwindigkeiten der hydrolysierbaren Komponenten erhöht werden.

20. Beschichtungszusammensetzung nach einem der Ansprüche 1 bis 19, ferner aufweisend eine wirksame Menge eines Katalysators, um dadurch der gehärteten Beschichtung eine erhöhte Abriebfestigkeit zu vermitteln.

21. Beschichtungszusammensetzung nach Anspruch 20, worin die wirksame Menge des Katalysators bezogen auf die Gesamtfeststoffe der Beschichtungszusammensetzung etwa 0,05% bis etwa 20 Gew.% beträgt.

22. Beschichtungszusammensetzung nach einem der Ansprüche 1 bis 21, ferner aufweisend eine wirksame Menge eines Egalisiermittels, wodurch die wässrig-organische Lösemittelmischung auf dem Substrat ausgebreitet wird, um einen im Wesentlichen gleichförmigen Kontakt der wässrig-organischen Lösemittelmischung mit dem Substrat zu gewähren.

23. Artikel, aufweisend:
ein Substrat und eine weitgehend transparente, abriebfeste Beschichtung, die auf mindestens einer der Oberflächen des Substrats erzeugt wird, wobei die Beschichtung eine Brechzahl hat, die im Wesentlichen der Brechzahl des Substrats entspricht, und erzeugt wird durch Härten einer Beschichtungszusammensetzung, wobei die Beschichtungszusammensetzung diejenige nach einem der Ansprüche 1 bis 22 ist.

24. Verfahren zur Gewährung einer abriebfesten Beschichtung auf dem Substrat, wobei die abriebfeste Beschichtung eine kontrollierte Abtönbarkeit hat sowie eine Brechzahl, die im Wesentlichen der Brechzahl des Substrats entspricht, welches Verfahren umfasst:
Aufbringen auf mindestens einer der Oberflächen eines Substrats eine wirksame Menge einer Beschichtungszusammensetzung, um auf dem Substrat eine im Wesentlichen gleichförmige Beschichtung aus der Beschichtungszusammensetzung zu schaffen, wobei die Beschichtungszusammensetzung eine solche nach einem der Ansprüche 1 bis 22 ist; und
Härten der Beschichtungszusammensetzung, um auf dem Substrat eine gehärtete Beschichtung zu schaffen, die eine kontrollierte Abtönbarkeit hat und eine Brechzahl, die im Wesentlichen der Brechzahl des Substrats entspricht.

## Revendications

1. Composition de revêtement qui, lorsqu'elle est appliquée sur un substrat et durcie, produit un revêtement résistant à l'abrasion ayant un indice de réfraction, à celui du substrat, comprenant:
un mélange aqueux-solvant organique contenant des produits d'hydrolyse et des condensats partiels d'un silane à fonction époxy, un colloïde composite d'oxyde de métal, un disilane et un composé à fonction acide carboxylique où le composé à fonction acide carboxylique est choisi dans le groupe constitué d'acides carboxyliques monofonctionnels, d'acides carboxyliques multifonctionnels, d'anhydrides et de combinaisons de ceux-ci, et en outre où le silane à fonction époxy est présent dans un rapport molaire par rapport au composant de disilane et au composant de colloïde composite d'oxyde de métal d'environ 0,1:1 à 4:1.

2. Composition de revêtement selon la revendication 1, dans laquelle le disilane est représenté par la formule (R⁷O)ₓR⁸₃₋ₓSi-R⁹_{y}-SiR¹⁰₃₋ₓ(OR¹¹)ₓ; où x est 0, 1, 2 ou 3 et y est 0 ou 1; R⁸ et R¹⁰ sont H ou un groupe alkyle contenant d'environ 1 à 10 atomes de carbone, un groupe alkyle fonctionnalisé, un groupe alkylène, un groupe aryle, un groupe polyéther d'alkyle et des combinaisons de ceux-ci, R⁷ et R¹¹ sont H, un groupe alkyle contenant d'environ 1 à 10 atomes de carbone, un groupe acétyle, et des combinaisons de ceux-ci; dans lequel si y est 1 alors R⁹ peut être un groupe alkylène contenant d'environ 1 à 12 atomes de carbone, un groupe polyéther d'alkylène contenant d'environ 1 à 12 atomes de carbone, un groupe aryle, un groupe aryle substitué par un alkylène, un groupe alkylène qui peut contenir une ou plusieurs oléfines, ou un atome d'oxygène ou de soufre; et en outre dans lequel si x = 0 alors R⁹ et R¹⁰ sont un atome de chlore ou de brome.

3. Composition de revêtement selon l'une quelconque des revendications 1 à 2, dans laquelle les produits d'hydrolyse et condensats partiels du silane à fonction époxy sont présents dans le mélange aqueux-solvant organique en une quantité d'environ 10 à environ 90 pour cent en, poids sur la base des matières solides totales de la composition de revêtement.

4. (Amendée) Composition de revêtement selon l'une quelconque des revendications 1 à 2, dans laquelle le composé à fonction acide carboxylique est présent dans le mélange aqueux-solvant organique en une quantité d'environ 1,0 à 90 pour cent en poids, sur la base du poids total de la composition de revêtement.

5. Composition de revêtement selon l'une quelconque des revendications 1 à 2, comprenant en outre un composant de silice colloïdale présent dans le mélange aqueux-solvant organique en une quantité d'environ 0,1 à 75 pour cent en poids, sur la base des matières solides totales de la composition de revêtement.

6. Composition de revêtement selon l'une quelconque des revendications 1 à 2, dans laquelle le colloïde composite d'oxyde de métal est présent dans le mélange aqueux-solvant organique en une quantité d'environ 1 à 90 pour cent en poids, sur la base des matières solides totales de la composition de revêtement.

7. Composition de revêtement selon l'une quelconque des revendications 1 2, dans laquelle le mélange aqueux-solvant organique comprend en outre d'environ 0,1 à environ 50 pour cent en poids, sur la base des matières solides totales de la composition, d'un mélange de produits d'hydrolyse et de condensats partiels d'un additif de silane représenté par la formule R⁷ₓSi (OR⁸)₄₋ₓ où x est un entier de 1, 2 ou 3, R⁷ est H, un groupe alkyle contenant de 1 à environ 10 atomes de carbone, un groupe alkyle fonctionnalisé, un groupe alkylène, un groupe aryle, un groupe éther d'alkyle et des combinaisons de ceux-ci, R⁸ est H, un groupe alkyle contenant de 1 à environ 10 atomes de carbone, un groupe acétyle et des combinaisons de ceux-ci.

8. Composition de revêtement selon l'une quelconque des revendications 1 à 2, dans laquelle la quantité d'eau présente dans le mélange aqueux-solvant organique est une quantité suffisante pour produire un mélange sensiblement homogène de produits d'hydrolyse et de condensats partiels des silanes à fonction alcoxy.

9. Composition de revêtement selon la revendication 8, comprenant en outre une quantité efficace d'un catalyseur de condensation

10. Composition de revêtement selon l'une quelconque des revendications 1 à 2, dans laquelle le disilane est présent dans le mélange aqueux-solvant organique en une quantité d'environ 1 à 75 pour cent en poids, sur la base des matières solides totales de la composition.

11. Composition de revêtement selon l'une quelconque des revendications 1 à 2 comprenant en outre d'environ 0,1 à 75 pour cent en poids, sur la base des matières solides totales de la composition, d'un composant de silice colloïdale.

12. Composition de revêtement selon l'une quelconque des revendications 1 à 11, dans laquelle le constituant de solvant du mélange aqueux-solvant organique est choisi dans le groupe constitué d'un alcool, un éther, un éther de glycol, un ester, une cétone, un acétate d'éther de glycol et des combinaisons de ceux-ci.

13. Composition de revêtement selon l'une quelconque des revendications 1 à 11, dans laquelle le constituant de solvant du mélange aqueux-solvant organique est un alcool ayant la formule générale ROH, où R est un groupe alkyle contenant d'environ 1 à environ 10 atomes de carbone.

14. Composition de revêtement selon l'une quelconque des revendications 1 à 11, dans laquelle le constituant de solvant du mélange aqueux-solvant organique est choisi dans le groupe constitué du glycol, d'un éther, d'un éther de glycol et des mélanges de ceux-ci ayant la formule R¹-(OR²)ₓ-OR¹ où x est un entier de 0, 1, 2, 3, ou 4, R¹ est H ou un groupe alkyle contenant d'environ 1 à environ 10 atomes de carbone, et R² est un groupe alkylène contenant d'environ 1 à environ 10 atomes de carbone et des combinaisons de ceux-ci.

15. Composition de revêtement selon l'une quelconque des revendications 1 à 14, dans laquelle le silane à fonction époxy est représenté par la formule R³ₓSi (OR⁴)₄₋ₓ où x est un entier de 1, 2 ou 3, R³ est H, un groupe alkyle, un groupe alkyle fonctionnalisé, un groupe alkylène, un groupe aryle, un éther d'alkyle, et des combinaisons de ceux-ci contenant de 1 à environ 10 atomes de carbone et ayant au moins 1 groupe fonctionnel époxy, et R⁴ est H, un groupe alkyle contenant de 1 à environ 5 atomes de carbone, un groupe acétyle, un groupe Si(OR⁵)_{3-y}R⁶_{y} où y est un entier de 0, 1, 2, ou 3, et des combinaisons de ceux-ci, R⁵ est H, un groupe alkyle contenant de 1 à environ 5 atomes de carbone, un groupe acétyle, un autre groupe Si(OR⁵)_{3-y}R⁶_{y}, et des combinaisons de ceux-ci, et R⁶ est H, un groupe alkyle, un groupe alkyle fonctionnalisé, un groupe alkylène, un groupe aryle, un éther d'alkyle et des combinaisons de ceux-ci contenant de 1 à environ 10 atomes de carbone.

16. Composition de revêtement selon l'une quelconque des revendications 1 à 2, dans laquelle le composé à fonction acide carboxylique est représenté par la formule R⁷(COOR⁸)ₓ, où x est un entier de 1, 2, 3, ou 4, et où R⁷ est H, un groupe alkyle, un groupe alkyle fonctionnalisé, un groupe alkylène, un groupe aryle, un groupe aryle fonctionnalisé, un éther d'alkyle, et des combinaisons de ceux-ci contenant de 1 à environ 10 atomes de carbone, et où R⁸ est H, un groupe formyle, un groupe carbonyle, ou un groupe acyle, où le groupe acyle peut être fonctionnalisé avec un groupe alkyle, un groupe alkyle fonctionnalisé, un groupe alkylène, un groupe aryle, un groupe aryle fonctionnalisé, un éther d'alkyle, et des combinaisons de ceux-ci contenant de 1 à environ 10 atomes de carbone, et où R⁷ et R⁸ peuvent être ou non liés par une liaison chimique.

17. Composition de revêtement selon l'une quelconque des revendications 1 à 16, dans laquelle le colloïde composite d'oxyde de métal peut contenir une combinaison quelconque d'alumine, de silice, d'oxyde de titane, de zircone, d'oxyde d'étain, d'oxyde d'antimoine, d'oxyde de fer, d'oxyde de plomb, et/ou d'oxyde de bismuth, et en outre dans laquelle au moins un composant du colloïde composite d'oxyde de métal n'est ni l'alumine ni la silice.

18. Composition de revêtement selon l'une quelconque des revendications 1 à 17, dans laquelle la quantité d'eau présente dans le mélange aqueux-solvant organique est une quantité suffisante pour produire un mélange sensiblement homogène de produits d'hydrolyse et de condensats partiels de tous les composants réactifs.

19. Composition de revêtement selon la revendication 18 comprenant en outre une quantité efficace de catalyseur de co-hydrolyse de manière à augmenter les taux d'hydrolyse des composants hydrolysables.

20. Composition de revêtement selon l'une quelconque des revendications 1 à 19, comprenant en outre une quantité efficace d'un catalyseur de manière à produire une résistance à l'abrasion augmentée du revêtement durci.

21. Composition de revêtement selon la revendication 20, dans laquelle la quantité efficace du catalyseur est d'environ 0,05 à environ 20 pour cent en poids, sur la base des matières solides totales de la composition de revêtement.

22. Composition de revêtement selon l'une quelconque des revendications 1 à 21 comprenant en outre une quantité efficace d'un agent d'étalement de manière à étaler le mélange aqueux-solvant organique sur le substrat de manière à produire un contact sensiblement uniforme du mélange aqueux-solvant organique avec le substrat.

23. Article comprenant:
un substrat; et
un revêtement sensiblement résistant à l'abrasion transparent formé sur au moins une surface du substrat, le revêtement ayant un indice de réfraction correspondant sensiblement à l'indice de réfraction du substrat et étant formé par durcissement d'une composition de revêtement, dans lequel la composition de revêtement est selon l'une quelconque des revendications 1 à 22.

24. Procédé pour produire un revêtement résistant à l'abrasion sur le substrat dans lequel le revêtement résistant à l'abrasion a une aptitude à la teinture et un indice de réfraction correspondant sensiblement à l'indice de réfraction du substrat, le procédé comprenant les étapes consistant à:
appliquer sur au moins une surface d'un substrat une quantité efficace d'une composition de revêtement de manière à produire un revêtement sensiblement uniforme de la composition de revêtement sur le substrat, où la composition de revêtement est selon l'une quelconque des revendications 1 à 22; et
durcir la composition de revêtement de manière à pourvoir le substrat d'un revêtement durci ayant une aptitude à la teinture contrôlée et un indice de réfraction correspondant sensiblement à l'indice de réfraction du substrat.
